(19) **Europäisches Patentamt / European Patent Office / Office européen des brevets**

(11) **EP 4 439 108 B1**

(12) **FASCICULE DE BREVET EUROPEEN**

(45) Date de publication et mention de la délivrance du brevet:
**29.10.2025 Bulletin 2025/44**

(21) Numéro de dépôt: **24162551.6**

(22) Date de dépôt: **11.03.2024**

(51) Classification Internationale des Brevets (IPC):
**G01S 1/14** *(2006.01)*  **G01S 1/02** *(2010.01)*
**G01S 19/15** *(2010.01)*  **G01S 19/47** *(2010.01)*
**G01S 19/49** *(2010.01)*  **G08G 5/00** *(2025.01)*
**G05D 1/247** *(2024.01)*  **G05D 1/46** *(2024.01)*
**G05D 1/654** *(2024.01)*  **G05D 105/22** *(2024.01)*
**G05D 107/13** *(2024.01)*  **G05D 1/646** *(2024.01)*
**G05D 109/22** *(2024.01)*  **G05D 111/30** *(2024.01)*
**G08G 5/21** *(2025.01)*  **G08G 5/54** *(2025.01)*
**G08G 5/26** *(2025.01)*

(52) Classification Coopérative des Brevets (CPC):
**G01S 1/14; G01S 19/15; G01S 19/49; G05D 1/247; G05D 1/46; G05D 1/646; G05D 1/6545; G08G 5/21; G08G 5/26; G08G 5/54;** G01S 19/47; G05D 2105/22; G05D 2107/13; G05D 2109/22; G05D 2111/30

(54) **PROCÉDÉ ET DISPOSITIF D'ESTIMATION D'UNE POSITION ET D'UNE VITESSE D'UN AÉRONEF LORS D'UNE PHASE D' APPROCHE PERMETTANT UN ATTERRISSAGE AUTOMATIQUE**

VERFAHREN UND VORRICHTUNG ZUR SCHÄTZUNG EINER POSITION UND GESCHWINDIGKEIT EINES FLUGZEUGS WÄHREND EINER ANZUGSPHASE FÜR AUTOMATISCHE LANDUNG

METHOD AND DEVICE FOR ESTIMATING A POSITION AND A SPEED OF AN AIRCRAFT DURING AN APPROACH PHASE FOR AUTOMATIC LANDING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.03.2023 FR 2303061**

(43) Date de publication de la demande:
**02.10.2024 Bulletin 2024/40**

(73) Titulaire: **AIRBUS OPERATIONS (SAS)**
**31060 Toulouse (FR)**

(72) Inventeurs:
• **BRUNOT, Mathieu**
**31060 TOULOUSE (FR)**
• **BRUNET, Cédric**
**31060 TOULOUSE (FR)**
• **GONZALEZ-CONDE, Damien**
**31060 TOULOUSE (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**EP-B1- 3 327 534    FR-A1- 3 111 710**

**Description**

**Domaine technique**

La présente invention concerne un procédé et dispositif d'estimation d'une position et d'une vitesse d'un aéronef lors d'une phase d'approche permettant un atterrissage automatique.

**État de la technique**

L'atterrissage automatique d'un aéronef sur une piste d'atterrissage impose de sévères contraintes quant à la mise en œuvre des systèmes de navigation de l'aéronef.

Pour chaque piste d'atterrissage d'un aéroport, il existe généralement une ou plusieurs approches prédéfinies, publiées sur des cartes aéronautiques. À chaque approche correspond une trajectoire d'approche de référence qui est notamment caractérisée par un axe d'approche de référence de la piste d'atterrissage considérée. Cet axe d'approche de référence peut être défini par une composante latérale et par une composante verticale. La composante latérale est généralement alignée avec un axe longitudinal de la piste d'atterrissage. La composante verticale de l'axe d'approche fait généralement un angle de 3° avec la piste.

Lors d'une phase d'approche vers une piste d'un aéroport, selon une approche prédéfinie de ladite piste, un aéronef peut être guidé pour son atterrissage sur la piste par un système de radionavigation. Ce système de radionavigation peut correspondre à un système d'atterrissage aux instruments ILS (ILS pour « Instrument Landing System »). Le système de radionavigation comprend au moins une station émettrice située au sol, configurée pour émettre des signaux de guidage permettant à l'aéronef de se rapprocher de l'axe d'approche correspondant à l'approche prédéfinie. Parmi ces signaux, il existe notamment un signal de guidage latéral permettant à l'aéronef de connaître l'écart latéral qu'il possède avec la trajectoire d'approche de référence (écart avec la composante latérale de l'axe d'approche). Ce signal de guidage latéral est généralement nommé « signal Localizer ». Il existe également un signal de guidage vertical permettant à l'aéronef de connaître l'écart vertical qu'il possède avec la trajectoire d'approche de référence (écart avec la composante verticale de l'axe d'approche). Ce signal de guidage vertical est généralement nommé « signal Glide » ou « signal Glide Slope ».

Il existe plusieurs procédures d'approche et d'atterrissage utilisant un système ILS, appelées CAT I, CAT II et CAT III. La catégorie CAT III comportent en outre les catégories CAT IIIa, CAT IIIb et CAT IIIc et permet un a atterrissage automatique potentiellement sans hauteur de décision pour le pilote de l'aéronef. La catégorie I CAT I correspond à une procédure permettant à l'aéronef de descendre automatiquement jusqu'à une altitude de décision de 200 pieds (61 m) à condition que la portée visuelle de la piste (RVR pour « Runway Visual Range » en anglais) soit suffisante.

Actuellement, seules les catégories CAT II et CAT III (et installations ILS CAT II/III associées) répondent aux exigences nécessaires (principalement précision et intégrité) pour effectuer un atterrissage automatique complet jusqu'au toucher.

La catégorie CAT I ne permet pas actuellement de réaliser un tel atterrissage automatique.

Le document FR 3 111 710 A1 décrit un procédé d'estimation d'une déviation angulaire d'un axe de guidage de référence, d'une position et d'une vitesse d'un aéronef lors d'une procédure d'approche en vue d'un atterrissage sur une piste d'atterrissage.

Exposé de l'invention

La présente invention a pour objet de remédier au problème en proposant un procédé et un dispositif permettant l'utilisation d'une installation ILS de type CAT I pour des opérations d'atterrissage automatique.

Pour cela, elle concerne un procédé d'estimation, lors d'une procédure d'approche d'un aéronef en vue d'un atterrissage sur une piste d'atterrissage selon une approche prédéfinie de ladite piste d'atterrissage, d'une déviation par rapport à un axe de guidage de référence correspondant à ladite approche prédéfinie de la piste d'atterrissage, et d'une vitesse d'un aéronef par rapport à la piste d'atterrissage, la procédure d'approche étant réalisée à l'aide d'un dispositif d'aide à l'atterrissage, le dispositif d'aide à l'atterrissage comprenant au moins une station émettrice configurée pour émettre au moins un signal de guidage de référence définissant l'axe de guidage de référence,

Selon l'invention, le procédé comporte au moins les étapes suivantes répétées de façon itérative :

- une première étape d'acquisition, mise en œuvre par une première unité d'acquisition, pour acquérir au moins une position courante de l'aéronef déterminée par un système de géo-positionnement,
- une deuxième étape d'acquisition, mise en œuvre par une deuxième unité d'acquisition, pour acquérir des données inertielles courantes de l'aéronef dans un repère inertiel dont au moins une accélération courante déterminée par une centrale inertielle,

- une troisième étape d'acquisition, mise en œuvre par une troisième unité d'acquisition pour acquérir un écart latéral courant et un écart vertical courant à partir du ou des signaux de guidage de référence émis par le dispositif d'aide à l'atterrissage,
- une première étape de filtrage, mise en œuvre par une première unité de filtrage, pour estimer à l'aide d'un filtre de Kalman étendu une vitesse non-biaisée de l'aéronef dans le repère inertiel à partir au moins de la position courante de l'aéronef acquise à la première étape d'acquisition et des données inertielles courantes de l'aéronef acquises dans la deuxième étape d'acquisition,
- une première étape de changement de repère, mise en œuvre par une première unité de changement de repère, pour déterminer la vitesse non-biaisée de l'aéronef dans un repère lié à la piste d'atterrissage à partir de la vitesse non-biaisée dans le repère inertiel estimée dans la première étape de filtrage,
- une deuxième étape de changement de repère, mise en œuvre par une deuxième unité de changement de repère, pour déterminer la position courante de l'aéronef dans le repère lié à la piste d'atterrissage à partir de la position courante acquise dans la première étape d'acquisition et d'informations de localisation de la piste d'atterrissage provenant d'une base de données,
- une deuxième étape de filtrage, mise en œuvre par une deuxième unité de filtrage, pour estimer à l'aide d'au moins un filtre de Kalman étendu une position latérale et une position verticale de l'aéronef dans le repère lié à la piste d'atterrissage, à partir de l'écart latéral courant, l'écart vertical courant, la vitesse non-biaisée dans le repère lié à la piste d'atterrissage et de la position courante de l'aéronef dans le repère lié à la piste d'atterrissage déterminée dans la deuxième étape de changement de repère,
- une étape de détermination, mise en œuvre par une unité de détermination, pour déterminer la déviation latérale courante et la déviation verticale courante de l'aéronef dans le repère lié à la piste d'atterrissage ainsi que la vitesse latérale courante et la vitesse verticale courante de l'aéronef dans le repère lié à la piste d'atterrissage estimées dans la deuxième étape de filtrage à partir de la position latérale et la position verticale de l'aéronef ainsi que de la vitesse non-biaisée dans le repère inertiel estimée,
- une étape de transmission, mise en œuvre par une unité de transmission, pour transmettre à un dispositif utilisateur la déviation latérale courante et la déviation verticale courante de l'aéronef dans le repère lié à la piste d'atterrissage ainsi que la vitesse latérale courante et la vitesse verticale courante de l'aéronef dans le repère lié à la piste d'atterrissage.

Ainsi, grâce aux unités de filtrage, on obtient une précision suffisante de la déviation latérale courante, de la déviation verticale courante de l'aéronef dans le repère lié à la piste d'atterrissage ainsi que de la vitesse latérale courante et de la vitesse verticale courante de l'aéronef dans le repère lié à la piste d'atterrissage pour un atterrissage automatique
De plus, le filtre de Kalman étendu de la première étape de filtrage présente :

- un vecteur d'état comportant la vitesse non-biaisée estimée de l'aéronef dans le repère inertiel, la position estimée de l'aéronef et un biais d'accélération dans le repère inertiel,
- un vecteur de mesure comportant une position de l'aéronef déterminée par le système de géo-positionnement dans la première étape d'acquisition ;

la première étape de filtrage comprenant une sous-étape de mise à jour mise en œuvre par une unité de mise à jour pour mettre à jour la position estimée à l'aide de la position courante de l'aéronef déterminée par le système de géo-positionnement dans la première étape d'acquisition,
le filtre de Kalman étendu de la première étape de filtrage présentant en outre un modèle d'évolution dynamique comportant les équations suivantes :

$$dV_n/dt = a_n - 2\Omega_e V_e \sin(lat) + \frac{V_n V_Z}{M(lat) + h} - \frac{V_e^2 \tan(lat)}{N(lat) + h}$$

$$dV_e/dt = a_e + 2\Omega_e(V_n \sin(lat) + V_Z \cos(lat)) + \frac{V_e}{N(lat) + h}(V_Z + V_n \tan(lat))$$

$$dV_d/dt = a_Z - 2\Omega_e V_e \cos(lat) - \frac{V_n^2}{M(lat) + h} - \frac{V_e^2}{N(lat) + h} + g_D$$

$$dlat/dt = \frac{V_n}{M(lat) + h}$$

$$dlon/dt = \frac{V_e}{(N(lat) + h)\cos(lat)}$$

$$dh/dt = -V_d$$

$$dba_n/dt = dba_e/dt = dba_Z/dt = 0 \ ;$$

et un modèle d'observation comportant l'équation suivantes :

$$lat^{GNSS} = lat + v_{lat,GNSS}$$

$$lon^{GNSS} = lon + v_{lon,GNSS}$$

$$h^{GNSS} = h + v_{h,GNSS},$$

dans lesquelles :

$\Omega_e$ correspond à la vitesse de rotation de la terre,
M correspond au rayon de courbure méridien,
N correspond au rayon de courbure du premier vertical de la terre,
$g_d$ correspond à l'accélération de la pesanteur,
*lat* correspond à une coordonnée en latitude estimée de la position de l'aéronef dans le repère géographique,
*lon* correspond à une coordonnée en longitude estimée de la position de l'aéronef dans le repère géographique,
*h* correspond à une coordonnée en hauteur estimée de la position de l'aéronef dans le repère géographique,
*lat$^{GNSS}$* correspond à une coordonnée en latitude de la position de l'aéronef mesurée par le système de géo-positionnement dans le repère géographique,
*lon$^{GNSS}$* correspond à une coordonnée en longitude de la position de l'aéronef mesurée par le système de géo-positionnement dans le repère géographique,
*h$^{GNSS}$* correspond à une coordonnée en hauteur de la position de l'aéronef mesuré par le système de géo-positionnement dans le repère géographique,
$v_{lat,GNSS}$ correspond à un bruit blanc de la coordonnée en latitude mesurée par le système de géo-positionnement dans le repère géographique,
$v_{lon,GNSS}$ correspond à un bruit blanc de la mesure de la coordonnée en longitude mesurée par le système de géo-positionnement dans le repère géographique,
$v_{h,GNSS}$ correspond à un bruit blanc de la mesure de la coordonnée en hauteur mesurée par le système de géo-positionnement dans le repère géographique,
$a_n$ correspond à une coordonnée de l'accélération courante de l'aéronef dans une direction Nord dans le repère inertiel,
$a_e$ correspond à une coordonnée de l'accélération courante de l'aéronef dans une direction Est dans le repère inertiel,
$a_Z$ correspond à une coordonnée de l'accélération courante de l'aéronef dans une direction de la pesanteur terrestre dans le repère inertiel,
$ba_n$ correspond à une coordonnée du biais de l'accélération courante de l'aéronef dans une direction Nord dans le repère inertiel,
$ba_e$ correspond à une coordonnée du biais de l'accélération courante de l'aéronef dans une direction Est dans le repère inertiel,
$ba_Z$ correspond à une coordonnée du biais de l'accélération courante de l'aéronef dans une direction de la pesanteur terrestre dans le repère inertiel,
$V_n$ correspond à une coordonnée de la vitesse non-biaisée de l'aéronef dans une direction Nord dans le repère

inertiel,

$V_e$ correspond à une coordonnée de la vitesse non-biaisée de l'aéronef dans une direction Est dans le repère inertiel,

$V_Z$ correspond à une coordonnée de la vitesse non-biaisée de l'aéronef dans une direction de la pesanteur terrestre dans le repère inertiel.

Selon un premier mode de réalisation, la position courante de l'aéronef déterminée par le système de géo-positionnement et la position estimée de l'aéronef du vecteur d'état du filtre de Kalman étendu de la première étape de filtrage sont définies dans le repère géographique.

De plus, la deuxième étape de filtrage met en œuvre un premier filtre de Kalman étendu et un deuxième filtre de Kalman étendu,

le premier filtre de Kalman étendu présentant :

- un vecteur d'état comportant une position latérale de l'aéronef dans le repère lié à la piste d'atterrissage, un biais d'alignement angulaire d'un signal de guidage latéral délivré par le dispositif d'aide à l'atterrissage et un biais de facteur de sensibilité du signal de guidage latéral ;
- un vecteur de mesure comportant la position latérale dans le repère lié à la piste d'atterrissage et un écart latéral courant mesuré en microampère à partir du signal de guidage latéral,

le deuxième filtre de Kalman étendu présentant :

- un vecteur d'état comportant une position verticale dans le repère lié à la piste d'atterrissage, un biais d'alignement angulaire d'un signal de guidage vertical délivré par le dispositif d'aide à l'atterrissage et un biais de facteur de sensibilité du signal de guidage vertical ;
- un vecteur de mesure comportant la position verticale dans le repère lié à la piste d'atterrissage et un écart vertical courant mesuré en DDM à partir du signal de guidage vertical ;

la deuxième étape de filtrage comprenant une première sous-étape de mise à jour mise en œuvre par une première unité de mise à jour pour mettre à jour la position latérale de l'aéronef estimée par le premier filtre de Kalman étendu dans le repère lié à la piste d'atterrissage à l'aide de la position courante de l'aéronef dans le repère lié à la piste d'atterrissage déterminée dans la deuxième étape de changement de repère,

la deuxième étape de filtrage comprend une deuxième sous-étape de mise à jour mise en œuvre par une deuxième unité de mise à jour pour mettre à jour la position verticale de l'aéronef estimée par le premier filtre de Kalman étendu dans le repère lié à la piste d'atterrissage à l'aide de la position verticale courante de l'aéronef dans le repère lié à la piste d'atterrissage déterminée dans la deuxième étape de changement de repère,

- le premier filtre de Kalman étendu mis en œuvre dans la deuxième étape de filtrage présentant un modèle d'évolution dynamique comportant les équations suivantes :

$$dY_{rwy}/dt = V_{y_{rwy}}$$

$$db_{LOC_{Sensi}}/dt = db_{Align}/dt = 0,$$

et un modèle d'observation comportant l'équation suivante :

$$\eta_{loc} = \frac{L}{0{,}7 + b_{LOC_{Sensi}}} \cdot \frac{Y_{rwy} - \sin(b_{Align}) \cdot (L - X_{rwy})}{L - X_{rwy}} + v_{loc},$$

dans lesquelles :

$\eta_{loc}$ correspond à un écart latéral courant en microampère acquis à partir du ou des signaux de guidage de référence émis par le dispositif d'aide à l'atterrissage,

$v_{loc}$ correspond à un bruit de mesure de l'écart latéral courant

L correspond à une distance entre le seuil de la piste d'atterrissage et la station émettrice qui émet le signal de guidage latéral de référence.

$b_{LOC_{Sensi}}$ correspond à un biais de facteur de sensibilité du signal de guidage latéral de référence par rapport à un signal latéral de référence standardisé de 0,7,

$b_{Align}$ correspond au biais d'alignement angulaire du signal de guidage latéral,

$X_{rwy}$ correspond à une position longitudinale de l'aéronef dans le repère lié à la piste d'atterrissage,

$Y_{rwy}$ correspond à une position latérale de l'aéronef dans le repère lié à la piste d'atterrissage,

$V_{y_{rwy}}$ correspond à une vitesse latérale non-biaisée de l'aéronef dans le repère lié à la piste d'atterrissage ;

-   le deuxième filtre de Kalman étendu mis en œuvre dans la deuxième étape de filtrage présentant un modèle d'évolution dynamique comportant les équations suivantes :

$$dZ_{rwy}/dt = V_{z_{rwy}}$$

$$db_{GLD_{Sensi}}/dt = db_{GPA}/dt = 0,$$

et un modèle d'observation comportant l'équation suivante :

$$\eta_{GLD} = \frac{0,0875}{(GPA - b_{GPA}) \cdot (0,12 - b_{GLD_{Sensi}})} \cdot \left( \operatorname{atan}\left( \frac{Z_{rwy}}{X_{rwy} + dX} \right) - (GPA - b_{GPA}) \right) + v_{GLD},$$

dans lesquelles :

$\eta_{GLD}$ correspond à un écart vertical courant en DDM acquis à partir du ou des signaux de guidage de référence émis par le dispositif d'aide à l'atterrissage,

$v_{GLD}$ correspond à un bruit de mesure de l'écart vertical courant,

$b_{GLD_{Sensi}}$ correspond à un biais de facteur de sensibilité du signal de guidage vertical de référence par rapport à un signal de guidage vertical standardisé de 0,12,

$GPA$ correspond à un angle entre l'axe de guidage vertical défini par le signal de guidage vertical et la piste d'atterrissage,

$b_{GPA}$ correspond au biais d'alignement angulaire du signal de guidage vertical, $v_{GLD}$ correspond à un bruit de mesure de l'écart vertical courant,

$dX$ correspond à une distance longitudinale entre le seuil de la piste d'atterrissage et la station émettrice qui émet le signal de guidage vertical de référence,

$Z_{rwy}$ correspond à la position verticale de l'aéronef dans le repère lié à la piste d'atterrissage,

$V_{z_{rwy}}$ correspond à une vitesse verticale non-biaisée de l'aéronef dans le repère lié à la piste d'atterrissage.

De plus, la déviation latérale courante est égale à la position latérale de l'aéronef estimée par le premier filtre de Kalman étendu dans le repère lié à la piste d'atterrissage, la vitesse latérale courante est égale à la vitesse latérale estimée par le premier filtre de Kalman étendu dans le repère lié à la piste d'atterrissage

et la déviation verticale courante de l'aéronef répond à l'expression suivante :

$$DZ = Z_{rwy} - (X_{rwy} + dX) \cdot \tan(GPA - b_{GPA}),$$

la vitesse verticale courante de l'aéronef répondant à l'expression suivante :

$$DVZ = V_g \cdot \tan(GPA - b_{GPA}) - V_{z_{rwy}}.$$

Selon un deuxième mode de réalisation, la position courante de l'aéronef déterminée par le système de géo-positionnement et la position estimée de l'aéronef du vecteur d'état du filtre de Kalman étendu de la première étape de filtrage sont exprimées en pseudo-distance.

L'invention concerne également un dispositif d'estimation, lors d'une procédure d'approche d'un aéronef en vue d'un atterrissage sur une piste d'atterrissage selon une approche prédéfinie de ladite piste d'atterrissage, d'une déviation par rapport à un axe de guidage de référence correspondant à ladite approche prédéfinie de la piste d'atterrissage, et d'une vitesse d'un aéronef par rapport à la piste d'atterrissage, la procédure d'approche étant réalisée à l'aide d'un dispositif d'aide à l'atterrissage, le dispositif d'aide à l'atterrissage comprenant au moins une station émettrice configurée pour émettre un signal de guidage de référence définissant l'axe de guidage de référence,

Selon l'invention, le dispositif comporte au moins :

- une première unité d'acquisition configurée pour acquérir au moins une position courante de l'aéronef déterminée par un système de géo-positionnement,
- une deuxième unité d'acquisition configurée pour acquérir des données inertielles courantes de l'aéronef dans un repère inertiel dont au moins une accélération courante déterminées par une centrale inertielle,
- une troisième unité d'acquisition configurée pour acquérir un écart latéral courant et un écart vertical courant à partir du ou des signaux de guidage de référence émis par le dispositif d'aide à l'atterrissage,
- une première unité de filtrage configurée pour estimer à l'aide d'un filtre de Kalman étendu une vitesse non-biaisée de l'aéronef dans le repère inertiel à partir au moins de la position courante de l'aéronef acquise par la première unité d'acquisition et des données inertielles courantes de l'aéronef acquises par la deuxième unité d'acquisition,
- une première unité de changement de repère configurée pour déterminer la vitesse non-biaisée de l'aéronef dans un repère lié à la piste d'atterrissage à partir de la vitesse non-biaisée dans le repère inertiel estimée par la première unité de filtrage,
- une deuxième unité de changement de repère configurée pour déterminer la position courante de l'aéronef dans le repère lié à la piste d'atterrissage à partir de la position courante acquise par la première unité d'acquisition et d'informations de localisation de la piste d'atterrissage provenant d'une base de données,
- une deuxième unité de filtrage configurée pour estimer à l'aide d'au moins un filtre de Kalman étendu une position latérale et une position verticale de l'aéronef dans le repère lié à la piste d'atterrissage, à partir de l'écart latéral courant, l'écart vertical courant, la vitesse non-biaisée dans le repère lié à la piste d'atterrissage et de la position courante de l'aéronef dans le repère lié à la piste d'atterrissage déterminée par la deuxième unité de changement de repère,
- une unité de détermination configurée pour déterminer la déviation latérale courante et la déviation verticale courante de l'aéronef dans le repère lié à la piste d'atterrissage ainsi que la vitesse latérale courante et la vitesse verticale courante de l'aéronef dans le repère lié à la piste d'atterrissage estimées par la deuxième unité de filtrage à partir de la position latérale et la position vertical de l'aéronef ainsi que de la vitesse non-biaisée dans le repère inertiel estimée,
- une unité de transmission configurée pour transmettre à un dispositif utilisateur la déviation latérale courante et la déviation verticale courante de l'aéronef dans le repère lié à la piste d'atterrissage ainsi que la vitesse latérale courante et la vitesse verticale courante de l'aéronef dans le repère lié à la piste d'atterrissage

L'invention concerne aussi un aéronef comportant un dispositif d'estimation, tel que celui spécifié ci-dessus.

## Brève description des figures

Les figures annexées feront bien comprendre comment l'invention peut être réalisée. Sur ces figures, des références identiques désignent des éléments semblables.

La figure 1 représente une vue schématique du dispositif d'estimation.
La figure 2 représente une vue schématique du procédé d'estimation.
La figure 3 représente une vue de dessus d'un aéronef lors d'une procédure d'approche en vue d'un atterrissage sur une piste d'atterrissage.
La figure 4 représente une vue de profil d'un aéronef lors d'une procédure d'approche en vue d'un atterrissage sur une piste d'atterrissage.

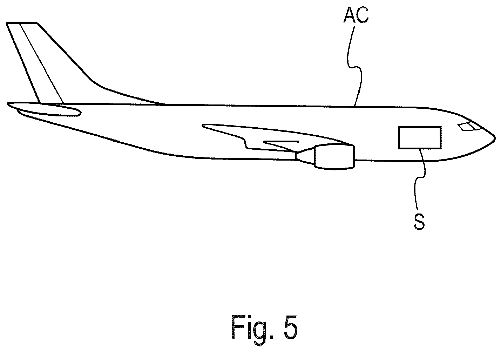

La figure 5 représente une vue de profil d'un aéronef embarquant le dispositif d'estimation.

## Description détaillée

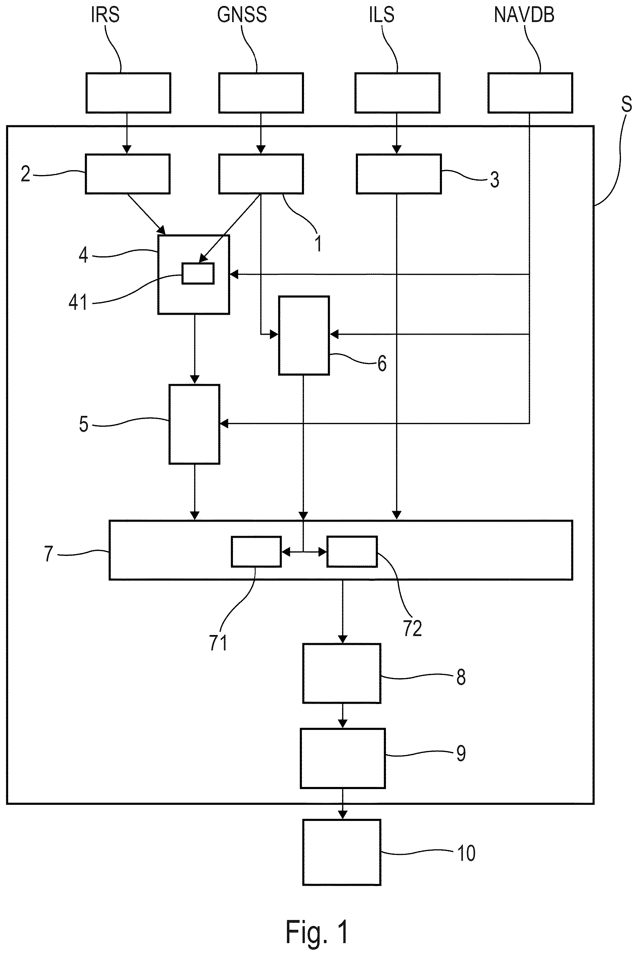

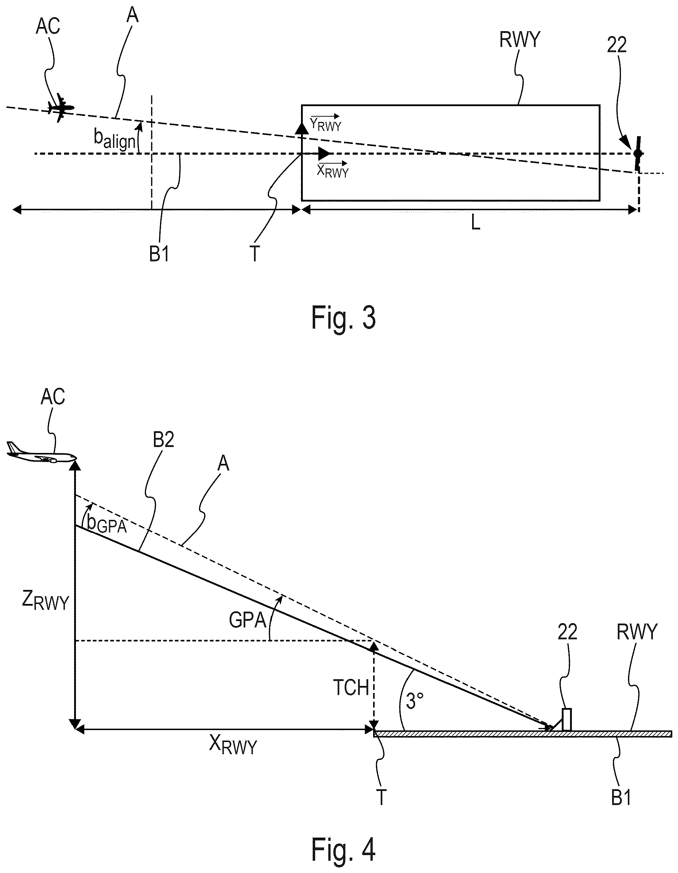

La figure 1 représente le dispositif d'estimation S d'une déviation *DY, DZ* par rapport à un axe de guidage de référence A et d'une vitesse *DVY, DVZ* d'un aéronef AC par rapport à une piste d'atterrissage RWY lors d'une procédure d'approche d'un aéronef AC en vue d'un atterrissage sur la piste d'atterrissage RWY selon une approche prédéfinie de ladite piste d'atterrissage RWY. L'axe de guidage de référence A correspond à une approche prédéfinie de la piste d'atterrissage RWY (figure 3).

Dans la suite de la description, ledit dispositif est appelé « dispositif d'estimation S ».

La piste d'atterrissage RWY définit un repère dans lequel l'origine dudit repère correspond à un seuil T de la piste d'atterrissage RWY, l'axe des abscisses dudit repère est porté par un vecteur unitaire parallèle à l'axe longitudinal B1 de la piste d'atterrissage RWY, l'axe des ordonnées est porté par un vecteur unitaire perpendiculaire à l'axe longitudinal B1 de la piste d'atterrissage et l'axe des cotes est porté par un vecteur unitaire porté perpendiculaire au plan comprenant l'axe des abscisses et l'axe des ordonnées. Dans la suite de la description, ce repère est appelé « repère lié à la piste d'atterrissage RWY ».

Le dispositif d'estimation S peut être intégré dans des calculateurs de commande de vol embarqué sur l'aéronef AC sous forme logicielle.

La procédure d'approche est réalisée à l'aide d'un dispositif d'aide à l'atterrissage, tel qu'un système ILS. Le dispositif d'aide à l'atterrissage comprend au moins une station émettrice 22 configurée pour émettre un signal de guidage de référence définissant l'axe de guidage de référence A.

Une station émettrice émet un signal de guidage latéral de référence correspondant à un signal de type « signal Localizer ». Une autre station émettrice émet un signal de guidage vertical de référence correspondant à un signal de type « signal Glide Slope ». Le signal de guidage latéral de référence définit la composante latérale de l'axe de guidage de référence A. Le signal de guidage vertical de référence définit la composante verticale de l'axe de guidage de référence A.

Le dispositif d'estimation S comporte au moins :

- une première unité d'acquisition 1,
- une deuxième unité d'acquisition 2,
- une troisième unité d'acquisition 3,
- une première unité de filtrage 4,
- une première unité de changement de repère 5,
- une deuxième unité de changement de repère 6,
- une deuxième unité de filtrage 7,
- une unité de détermination 8,
- une unité de transmission 9.

La première unité d'acquisition 1 est configurée pour acquérir au moins une position courante ($lat^{GNSS}$, $lon^{GNSS}$, $h^{GNSS}$) de l'aéronef AC déterminée par un système de géo-positionnement GNSS.

Le système de géo-positionnement peut correspondre à un système de géolocalisation et navigation par un système satellite GNSS (« Global Navigation Satellite System » en anglais), tel qu'un système GPS (« Global Positioning System » en anglais).

Par exemple, le système GPS peut être utilisé avec un système d'augmentation spatiale SBAS (« Satellite-Based Augmentation System » en anglais). Cette variante permet d'obtenir une position courante ($lat^{GNSS}$, $lon^{GNSS}$, $h^{GNSS}$) de l'aéronef AC plus précise.

Dans d'autres exemples, le système GPS peut être remplacé par un système Galileo, Glonass ou Beidou.

Dans un premier mode de réalisation, la position courante ($lat^{GNSS}$, $lon^{GNSS}$, $h^{GNSS}$) de l'aéronef AC peut être déterminée par le système de géo-positionnement GNSS dans un repère géographique. Dans le repère géographique, la position courante ($lat^{GNSS}$, $lon^{GNSS}$, $h^{GNSS}$) est définie par une coordonnée de latitude (en degré) $lat^{GNSS}$, une coordonnée de longitude (en degré) $lon^{GNSS}$ et une coordonnée de hauteur (en mètre) $h^{GNSS}$.

Dans un deuxième mode de réalisation, la position courante de l'aéronef AC déterminée par le système de géo-positionnement GNSS est exprimée en pseudo-distances. Une pseudo-distance correspond à une valeur indirecte de distance entre un satellite émetteur du système de géo-positionnement et le système de géo-positionnement GNSS par comparaison de l'instant de réception d'un signal reçu par le système de géo-positionnement GNSS et l'instant d'émission du signal par le satellite émetteur sans tenir compte de la synchronisation des horloges du système de géo-positionnement GNSS et du satellite émetteur.

La deuxième unité d'acquisition 2 est configurée pour acquérir des données inertielles courantes de l'aéronef AC dans un repère inertiel dont au moins une accélération courante ($a_n$, $a_e$, $a_z$) déterminées par une centrale inertielle IRS (« Inertial Refence System » en anglais) embarquée dans l'aéronef AC.

Le repère inertiel correspond à un repère NED (« North-East-Down » en anglais). Le repère NED est défini à partir d'un plan tangent à la surface de la terre. Le repère NED comprend un vecteur unitaire en abscisse coïncidant avec la direction Nord, un vecteur unitaire en ordonnée coïncidant avec la direction Est et un vecteur unitaire en cote coïncidant avec la direction de la pesanteur. L'origine de ce repère est choisie de telle sorte qu'elle coïncide avec le centre de gravité de l'aéronef.

Pour l'accélération courante ($a_n$, $a_e$, $a_z$), la coordonnée (en m/s²) $a_n$ est portée par le vecteur unitaire coïncidant avec la direction Nord. La coordonnée (en en m/s²) $a_e$ est portée par le vecteur unitaire coïncidant avec la direction Est. La coordonnée (en en m/s²) $a_z$ est portée par le vecteur unitaire coïncidant avec la direction de la pesanteur.

La troisième unité d'acquisition 3 est configurée pour acquérir un écart latéral courant $\eta_{LOC}$ et un écart vertical courant $\eta_{GLD}$ à partir du ou des signaux de guidage de référence émis par le dispositif d'aide à l'atterrissage 22.

L'écart latéral courant $\eta_{LOC}$ est déterminé à partir du signal latéral de référence définissant la composante latérale de l'axe de guidage de référence A.

L'écart vertical courant $\eta_{GLD}$ est déterminé à partir du signal de guidage vertical de référence définissant la composante verticale de l'axe de guidage de référence A. La première unité de filtrage 4 est configurée pour estimer à l'aide d'un filtre de Kalman étendu une vitesse non-biaisée ($V_n$, $V_e$, $V_d$) de l'aéronef AC dans le repère inertiel à partir au moins de la position courante ($lat^{GNSS}$, $lon^{GNSS}$, $h^{GNSS}$) de l'aéronef AC acquise par la première unité d'acquisition 1 et des données inertielles courantes de l'aéronef AC acquises par la deuxième unité d'acquisition 2.

Dans le repère inertiel, la coordonnée (en m/s) $V_n$ est portée par le vecteur unitaire coïncidant avec la direction Nord. La coordonnée (en m/s) $V_e$ est portée par le vecteur unitaire coïncidant avec la direction Est. La coordonnée (en m/s) $V_z$ est portée par le vecteur unitaire coïncidant avec la direction de la pesanteur terrestre. Le filtre de Kalman étendu de la première unité de filtrage 4 peut présenter un vecteur d'état comportant la vitesse non-biaisée ($V_n$, $V_e$, $V_d$) estimée de l'aéronef AC dans le repère inertiel, la position *(lat, lon, h)* estimée de l'aéronef AC et un biais d'accélération ($ba_n$, $ba_e$, $ba_Z$) dans le repère inertiel.

Dans le repère géographique, la position *(lat, lon, h)* estimée de l'aéronef AC est donc définie par une coordonnée de latitude (en degré) *lat,* une coordonnée de longitude (en degré) *lon* et une coordonnée de hauteur (en mètre) (ou altitude) *h.* Dans le repère inertiel, le biais d'accélération courante ($ba_n$, $ba_e$, $ba_Z$) est défini par une coordonnée (en m/s²) $ba_n$ dans une direction Nord, une coordonnée (en m/s²) $ba_e$ dans une direction Est et une coordonnée (en m/s²) $ba_Z$ dans une direction de la pesanteur terrestre.

Selon le premier mode de réalisation, la position *(lat, lon, h)* estimée de l'aéronef AC du vecteur d'état du filtre de Kalman étendu de la première étape de filtrage E4 est définie dans le repère géographique.

Dans la suite de la description du dispositif d'estimation S, la position courante ($lat^{GNSS}$, $lon^{GNSS}$, $h^{GNSS}$) de l'aéronef AC et la position *(lat, lon, h)* estimée de l'aéronef AC sont définies dans le repère géographique.

Ledit filtre de Kalman étendu de la première unité de filtrage 4 peut également présenter un vecteur de mesure comportant une position ($lat^{GNSS}$, $lon^{GNS}$, $h^{GNSS}$) de l'aéronef AC déterminée par le système de géo-positionnement GNSS dans la première étape d'acquisition E1. La première étape de filtrage E4 peut comprendre une sous-étape de mise à jour E41 pour mettre à jour la position *(lat, lon, h)* estimée à l'aide de la position courante ($lat^{GNSS}$, $lon^{GNSS}$, $h^{GNSS}$) de l'aéronef AC déterminée par le système de géo-positionnement GNSS dans la première étape d'acquisition E1.

Par ailleurs, le filtre de Kalman étendu de la première unité de filtrage 4 peut mettre en œuvre un modèle d'évolution comportant les équations suivantes :

$$dV_n/dt = a_n - 2\Omega_e V_e sin(lat) + \frac{V_n V_z}{M(lat) + h} - \frac{V_e{}^2 tan(lat)}{N(lat) + h}$$

$$dV_e/dt = a_e + 2\Omega_e(V_n sin(lat) + V_z cos(lat)) + \frac{V_e}{N(lat) + h}(V_z + V_n tan(lat))$$

$$dV_d/dt = a_z - 2\Omega_e V_e cos(lat) - \frac{V_n{}^2}{M(lat) + h} - \frac{V_e{}^2}{N(lat) + h} + g_d$$

$$dlat/dt = \frac{V_n}{M(lat) + h}$$

$$dlon/dt = \frac{V_e}{(N(lat) + h)cos(lat)}$$

$$dh/dt = -V_d$$

$$dba_n/dt = dba_e/dt = dba_Z/dt = 0 ;$$

et un modèle d'observation comportant l'équation suivantes :

$$lat^{GNSS} = lat + v_{lat,GNSS}$$

$$lon^{GNSS} = lon + v_{lon,GNSS}$$

$$h^{GNSS} = h + v_{h,GNSS}.$$

dans lesquelles :

$\Omega_e$ correspond à la vitesse de rotation de la terre (en rad/s).

M correspond au rayon de courbure méridien (en mètre).

N correspond au rayon de courbure du premier vertical de la terre (en mètre).

$g_d$ correspond à l'accélération de la pesanteur (en m/s$^2$).

*lat* correspond à une coordonnée en latitude estimée de la position de l'aéronef AC dans le repère géographique (en degré).

*lon* correspond à une coordonnée en longitude estimée de la position de l'aéronef AC dans le repère géographique (en degré).

*h* correspond à une coordonnée en hauteur estimée de la position de l'aéronef AC dans le repère géographique (en degré).

$lat^{GNSS}$ correspond à une coordonnée en latitude de la position de l'aéronef AC mesurée par le système de géo-positionnement GNSS dans le repère géographique (en degré).

$lon^{GNSS}$ correspond à une coordonnée en longitude de la position de l'aéronef AC mesurée par le système de géo-positionnement GNSS dans le repère géographique (en degré).

$h^{GNSS}$ correspond à une coordonnée en hauteur de la position de l'aéronef AC mesurée par le système de géo-positionnement GNSS dans le repère géographique (en degré).

$v_{lat,GNSS}$ correspond à un bruit blanc de la mesure de la coordonnée de latitude *lat* (en degré).

$v_{lon,GNSS}$ correspond à un bruit blanc de la mesure de la coordonnée de longitude *lon* (en degré).

$v_{h,GNSS}$ correspond à un bruit blanc de la mesure de la coordonnée de hauteur *h* (en degré).

$a_n$ correspond à une coordonnée de l'accélération courante de l'aéronef AC dans une direction Nord dans le repère inertiel.

$a_e$ correspond à une coordonnée de l'accélération courante de l'aéronef AC dans une direction Est dans le repère inertiel.

$a_Z$ correspond à une coordonnée de l'accélération courante de l'aéronef AC dans une direction de la pesanteur terrestre dans le repère inertiel.

$ba_n$ correspond à une coordonnée du biais de l'accélération courante de l'aéronef AC dans une direction Nord dans le repère inertiel.

$ba_e$ correspond à une coordonnée du biais de l'accélération courante de l'aéronef AC dans une direction Est dans le repère inertiel.

$ba_Z$ correspond à une coordonnée du biais de l'accélération courante de l'aéronef AC dans une direction de la pesanteur terrestre dans le repère inertiel.

$V_n$ correspond à une coordonnée de la vitesse non-biaisée de l'aéronef AC dans une direction Nord dans le repère inertiel (en m/s).

$V_e$ correspond à une coordonnée de la vitesse non-biaisée de l'aéronef AC dans une direction Est dans le repère inertiel (en m/s).

$V_Z$ correspond à une coordonnée de la vitesse non-biaisée de l'aéronef AC dans une direction de la pesanteur terrestre dans le repère inertiel (en m/s).

La première unité de changement de repère 5 est configurée pour déterminer la vitesse non-biaisée ($V_{x_{rwy}}$, $V_{y_{rwy}}$, $V_{z_{rwy}}$) de l'aéronef AC dans le repère lié à la piste d'atterrissage RWY à partir de la vitesse non-biaisée ($V_n$, $V_e$, $V_d$) dans le repère inertiel estimée par la première unité de filtrage 4.

Une fois que la position courante ($lat^{GNSS}$, $lon^{GNSS}$, $h^{GNSS}$) de l'aéronef AC est estimée et la vitesse non-biaisée ($V_n$, $V_e$, $V_d$) dans le repère inertiel est estimée, la première unité de changement de repère 5 détermine la vitesse non-biaisée ($V_{x_{rwy}}$, $V_{y_{rwy}}$, $V_{z_{rwy}}$) $V_{z_{rwy}}$) de l'aéronef AC dans le repère lié à la piste d'atterrissage RWY à l'aide des équations suivantes :

$$V_{x_{rwy}} = \cos(\psi_r)\, V_n + \sin(\psi_r)\, V_e$$

$$V_{y_{rwy}} = \sin(\psi_r)\, V_n - \cos(\psi_r)\, V_e$$

$$V_{z_{rwy}} = -V_d$$

dans lesquelles $\psi_r$ correspond l'orientation (en rad) de la piste d'atterrissage (« runway heading » en anglais) qui correspond à l'orientation de l'axe longitudinal B1 de la piste d'atterrissage RWY par rapport à la direction Nord.

$V_{x_{rwy}}$ correspond à la coordonnée de la vitesse non-biaisée (en m/s) portée par le vecteur unitaire parallèle à l'axe longitudinal B1 de la piste d'atterrissage RWY (vitesse non-biaisée longitudinale).

$V_{y_{rwy}}$ correspond à la coordonnée de la vitesse non-biaisée (en m/s) portée par le vecteur unitaire perpendiculaire à l'axe longitudinal B1 de la piste d'atterrissage RWY (vitesse non-biaisée latérale).

$V_{z_{rwy}}$ correspond à la coordonnée de la vitesse non-biaisée (en m/s) portée par le vecteur unitaire porté perpendiculaire au plan comprenant l'axe des abscisses et l'axe des ordonnées (vitesse non-biaisée verticale).

L'orientation de la piste d'atterrissage $\psi_r$ peut être fournie par une base de données de navigation NAVDB.

La deuxième unité de changement de repère 6 est configurée pour déterminer la position courante ( $X_{rwy}^{GNSS}$, $Y_{rwy}^{GNSS}$, $Z_{rwy}^{GNSS}$ ) de l'aéronef AC dans le repère lié à la piste d'atterrissage RWY à partir de la position courante $lat^{GNSS}$, $lon^{GNSS}$, $h^{GNSS}$ acquise par la première unité d'acquisition 1 et d'informations de localisation de la piste d'atterrissage RWY provenant du base de données, telle que la base de données de navigation NAVDB.

La position courante ( $X_{rwy}^{GNSS}$, $Y_{rwy}^{GNSS}$, $Z_{rw}^{GNSS}$ ) de l'aéronef AC dans le repère lié à la piste d'atterrissage RWY comporte :

- la coordonnée $X_{rwy}^{GNSS}$ qui correspond à la coordonnée de la position courante (en mètre) portée par le vecteur unitaire parallèle à l'axe longitudinal B1 de la piste d'atterrissage RWY (position longitudinale acquise par la première unité d'acquisition 1),

- la coordonnée $Y_{rwy}^{GNSS}$ qui correspond à la coordonnée de la position courante (en mètre) portée par le vecteur unitaire perpendiculaire à l'axe longitudinal B1 de la piste d'atterrissage RWY (position latérale acquise par la première unité d'acquisition 1),

- la coordonnée $Z_{rwy}^{GNSS}$ qui correspond à la coordonnée de la position courante (en mètre) portée par le vecteur unitaire porté perpendiculaire au plan comprenant l'axe des abscisses et l'axe des ordonnées (position verticale acquise par la première unité d'acquisition 1).

La deuxième unité de filtrage 7 est configurée pour estimer à l'aide d'au moins un filtre de Kalman étendu une position latérale $F_{rwy}$ et une position verticale $Z_{rwy}$ de l'aéronef AC dans le repère lié à la piste d'atterrissage RWY à partir de l'écart latéral courant $\eta_{LOC}$, l'écart vertical courant $\eta_{GLD}$, la vitesse non-biaisée ($V_{x_{rwy}}$, $V_{y_{rwy}}$, $V_{z_{rwy}}$) dans le repère lié à la piste d'atterrissage RWY et de la position courante ( $X_{rwy}^{GNSS}$, $Y_{rwy}^{GNSS}$, $Z_{rwy}^{GNSS}$ ) de l'aéronef AC dans le repère lié à la piste d'atterrissage RWY déterminée par la deuxième unité de changement de repère 6,.

La deuxième unité de filtrage 7 peut mettre en œuvre un premier filtre de Kalman étendu et un deuxième filtre de Kalman étendu.

Le premier filtre de Kalman étendu de la deuxième unité de filtrage 7 peut présenter un vecteur d'état comportant une position latérale $Y_{rwy}$ (en mètre) de l'aéronef AC dans le repère lié à la piste d'atterrissage RWY, un biais d'alignement angulaire $b_{Align}$ (en radian) d'un signal de guidage latéral délivré par le dispositif d'aide à l'atterrissage et un biais de facteur de sensibilité $b_{LOC_{Sensi}}$ du signal de guidage latéral.

La position latérale $Y_{rwy}$ correspond à la coordonnée de la position de l'aéronef selon l'axe des ordonnées dans le repère lié à la piste d'atterrissage RWY.

Le biais d'alignement angulaire du signal de guidage latéral $b_{Align}$ correspond à une déviation angulaire du signal de guidage latéral (signal Localizer) qui définit un axe de guidage latéral par rapport à la composante latérale de l'axe d'approche de référence correspondant à l'axe longitudinal de la piste d'atterrissage RWY. L'axe longitudinal B1 de la piste d'atterrissage RWY correspond à un axe qui sépare la piste d'atterrissage RWY en deux parties sensiblement identiques dans le sens de la longueur de la piste d'atterrissage RWY.

Le premier filtre de Kalman étendu de la deuxième unité de filtrage 7 peut aussi présenter un vecteur de mesure comportant la position latérale courante $Y_{rwy}^{GNSS}$ (en mètre) dans le repère lié à la piste d'atterrissage RWY et un écart latéral courant $\eta_{LOC}$ mesuré en microampère ou en DDM à partir du signal de guidage latéral de référence et acquise par la troisième unité d'acquisition 3.

L'écart latéral courant $\eta_{LOC}$ mesuré en DDM (« Difference in the Depth Modulation » en anglais) signifie qu'il est mesuré en différence de taux de modulation. En pratique, il est exprimé comme un pourcentage. Le signal de guidage latéral comporte deux parties. Chacune des parties est émise à une fréquence différente l'une de l'autre. Le DDM correspond à une différence entre le taux de modulation d'une partie émise à une fréquence et le taux de modulation de l'autre partie émise à une autre fréquence. L'écart latéral est nul si l'aéronef AC suit une trajectoire alignée avec l'axe de guidage latéral.

Le premier filtre de Kalman étendu de la deuxième unité de filtrage 7 susceptible d'être mis en œuvre dans la deuxième unité de filtrage 7 peut mettre en œuvre un modèle d'évolution comportant les équations suivantes :

$$dY_{rwy}/dt = V_{y_{rwy}}$$

$$db_{LOC_{Sensi}}/dt = db_{Align}/dt = 0,$$

et un modèle d'observation comportant l'équation suivante :

$$\eta_{loc} = \frac{L}{0{,}7 + b_{LOC_{Sensi}}} \cdot \frac{Y_{rwy} - \sin(b_{Align}) \cdot (L - X_{rwy})}{L - X_{rwy}} + v_{loc}.$$

$\eta_{loc}$ correspond à un écart latéral courant acquis par la troisième unité d'acquisition 3 à partir du ou des signaux de guidage de référence émis par le dispositif d'aide à l'atterrissage 22.

$v_{loc}$ correspond à un bruit de mesure (en microampère) de l'écart latéral courant L correspond à une distance (en mètre) entre le seuil T de la piste d'atterrissage RWY et la station émettrice qui émet le signal de guidage latéral de référence.

$b_{LOC_{Sensi}}$ correspond à un biais de facteur de sensibilité du signal de guidage latéral de référence (Localizer) par rapport à un signal latéral standardisé de 0,7.

Le facteur de sensibilité standardisé de 0,7 correspond à un facteur de sensibilité conforme aux normes de l'Organisation de l'aviation civile internationale ICAO (ICAO pour « International Civil Aviation Organization » en anglais).

$b_{Align}$ correspond au biais d'alignement angulaire du signal de guidage latéral. $X_{rwy}$ correspond à la position longitudinale (dans une direction parallèle à l'axe longitudinale de la piste d'atterrissage RWY selon l'axe des abscisses) de l'aéronef AC dans le repère lié à la piste d'atterrissage RWY (en mètre).

$Y_{rwy}$ correspond à la position latérale de l'aéronef AC dans le repère lié à la piste d'atterrissage RWY (en mètre).

$V_{y_{rwy}}$ correspond à une vitesse latérale non-biaisée de l'aéronef AC dans le repère lié à la piste d'atterrissage RWY (en m/s).

Le deuxième filtre de Kalman étendu de la deuxième unité de filtrage 7 peut présenter un vecteur d'état comportant une position verticale $Z_{rwy}$ (en mètre) dans le repère lié à la piste d'atterrissage RWY, un biais d'alignement angulaire $b_{GPA}$ (en radian) d'un signal de guidage vertical délivré par le dispositif d'aide à l'atterrissage et un biais de facteur de sensibilité $b_{GLD_{Sensi}}$ du signal de guidage vertical.

La position verticale $Z_{rwy}$ correspond à la coordonnée de la position de l'aéronef selon l'axe des cotes dans le repère lié à la piste d'atterrissage RWY.

Le biais d'alignement angulaire du signal de guidage vertical $b_{GPA}$ correspond à une déviation angulaire du signal de guidage vertical (signal Glide Slope) qui définit un axe de guidage vertical A par rapport à la composante verticale de l'axe d'approche de référence B2 faisant un angle prédéterminé avec la piste d'atterrissage RWY. De façon non limitative, l'angle prédéterminé est égal à 3° (figure 4). L'angle prédéterminé peut également être fourni par base de données de navigation NAVDB.

Le deuxième filtre de Kalman étendu de la deuxième unité de filtrage 7 peut aussi présenter un vecteur de mesure comportant la position verticale $Z_{rwy}^{GNSS}$ de l'aéronef dans le repère lié à la piste d'atterrissage RWY et un écart vertical courant $\eta_{GLD}$ mesuré en DDM ou en microampère à partir du signal de guidage vertical de référence.

L'écart vertical courant $\eta_{GLD}$ mesuré en DDM (« Difference in the Depth Modulation » en anglais), comme pour l'écart latéral courant $\eta_{LOC}$, signifie qu'il est mesuré en différence de taux de modulation. Le signal de guidage vertical comporte deux parties. Chacune des parties est émise à une fréquence différente l'une de l'autre. Le DDM correspond à une différence entre le taux de modulation d'une partie émise à une fréquence et le taux de modulation de l'autre partie émise à une autre fréquence. L'écart vertical est nul si l'aéronef AC suit une trajectoire alignée avec l'axe de guidage vertical.

Le deuxième filtre de Kalman étendu de la deuxième unité de filtrage 7 susceptible d'être mis en œuvre dans la deuxième unité de filtrage 7 met en œuvre un modèle d'évolution comportant les équations suivantes :

$$dZ_{rwy}/dt = V_{z_{rwy}}$$

$$db_{GLD_{Sensi}}/dt = db_{GPA}/dt = 0,$$

et un modèle d'observation comportant l'équation suivante :

$$\eta_{GLD} = \frac{0,0875}{(GPA - b_{GPA}) \cdot (0,12 - b_{GLD_{Sensi}})} \cdot \left(\text{atan}\left(\frac{Zrwy}{X_{rwy} + dX}\right) - (GPA - b_{GPA})\right) + v_{GLD}.$$

$\eta_{GLD}$ correspond à un écart vertical courant acquis (en DDM) par la troisième unité d'acquisition 3 à partir du ou des signaux de guidage de référence émis par le dispositif d'aide à l'atterrissage 22.

$v_{GLD}$ correspond à un bruit de mesure (en DDM) de l'écart vertical courant $\eta_{GLD}$. $b_{GLDSensi}$ correspond à un biais de facteur de sensibilité du signal de guidage vertical de référence (Glide slope) par rapport à un signal de guidage vertical standardisé de 0,12 (par l'ICAO).

$GPA$ correspond à un angle (en radian) entre l'axe de guidage vertical défini par le signal de guidage vertical (signal Glide Slope) et la piste d'atterrissage RWY.

$b_{GPA}$ correspond au biais d'alignement angulaire du signal de guidage vertical (en radian).

$v_{GLD}$ correspond à un bruit de mesure (en DDM) de l'écart vertical courant $\eta_{GLD}$. $dX$ correspond à une distance (en mètre) entre le seuil T de la piste d'atterrissage RWY et la station émettrice qui émet le signal de guidage vertical de référence.

$dX$ peut être déterminé à partir de l'équation suivante : $dX = TCH/\text{tan}(GPA)$ dans laquelle $TCH$ correspond à la hauteur (en mètre) par rapport au seuil T de la piste d'atterrissage RWY à laquelle l'écart verticale est nul (en mètre).

$Z_{rwy}$ correspond à la position verticale de l'aéronef AC dans le repère lié à la piste d'atterrissage RWY (en mètre).

$V_{z_{rwy}}$ correspond à une vitesse verticale non-biaisée de l'aéronef AC dans le repère lié à la piste d'atterrissage RWY (en m/s).

La deuxième unité de filtrage 7 peut comprendre une première unité de mise à jour 71 configurée pour mettre à jour la position latérale $F_{rwy}$ de l'aéronef AC estimée par le premier filtre de Kalman étendu dans le repère lié à la piste d'atterrissage RWY à l'aide de la position latérale courante $Y_{rwy}^{GNSS}$ de l'aéronef AC dans le repère lié à la piste d'atterrissage RWY déterminée par la deuxième unité de changement de repère 6.

La deuxième unité de filtrage 7 peut aussi comprendre une deuxième unité de mise à jour 72 configurée pour mettre à jour la position verticale $Z_{rwy}$ de l'aéronef AC estimée par le premier filtre de Kalman étendu dans le repère lié à la piste d'atterrissage RWY à l'aide de la position verticale courante $Z_{rwy}^{GNSS}$ de l'aéronef AC dans le repère lié à la piste d'atterrissage RWY déterminée par la deuxième unité de changement de repère 6.

L'unité de détermination 8 est configurée pour déterminer la déviation latérale $DY$ courante et la déviation verticale $DZ$ courante de l'aéronef AC dans le repère lié à la piste d'atterrissage RWY ainsi que la vitesse latérale $DVY$ courante et la vitesse verticale $DVZ$ courante de l'aéronef AC dans le repère lié à la piste d'atterrissage RWY à partir de la position latérale $Y_{rw}$ et la position verticale $Z_{rwy}$ de l'aéronef AC ainsi que de la vitesse non-biaisée ($V_n$, $V_e$, $V_d$) estimée dans le repère inertiel.

La déviation latérale $DY$ courante est égale à la position latérale $F_{rwy}$ de l'aéronef AC estimée par le premier filtre de Kalman étendu dans le repère lié à la piste d'atterrissage RWY. La vitesse latérale $DVY$ courante est égale à la vitesse latérale $V_{Y_{rwy}}$ estimée par le premier filtre de Kalman étendu dans le repère lié à la piste d'atterrissage RWY.

La déviation verticale $DZ$ courante de l'aéronef AC répond à l'expression suivante :

$$DZ = Z_{rwy} - (X_{rwy} + dX) \cdot \text{tan}(GPA - b_{GPA}).$$

La vitesse verticale $DVZ$ courante de l'aéronef AC répond à l'expression suivante :

$$DVZ = V_g \cdot \text{tan}(GPA - b_{GPA}) - V_{Z_{rwy}}.$$

$V_g$ correspond à une vitesse au sol (« ground velocity » en anglais) de l'aéronef AC.

Ladite vitesse au sol est égale à l'expression suivante : $V_g = \sqrt{(V_e^2 + V_n^2)}$ .

L'unité de transmission 9 est configurée pour transmettre à un dispositif utilisateur 10 la déviation latérale *DY* courante et la déviation verticale *DZ* courante de l'aéronef AC dans le repère lié à la piste d'atterrissage RWY ainsi que la vitesse latérale *DVY* courante et la vitesse verticale *DVZ* courante de l'aéronef AC dans le repère lié à la piste d'atterrissage RWY estimées par la deuxième unité de filtrage 7.

Le dispositif utilisateur 10 peut correspondre à un système d'atterrissage automatique configuré pour piloter l'aéronef AC pour atterrissage sur la piste d'atterrissage RWY.

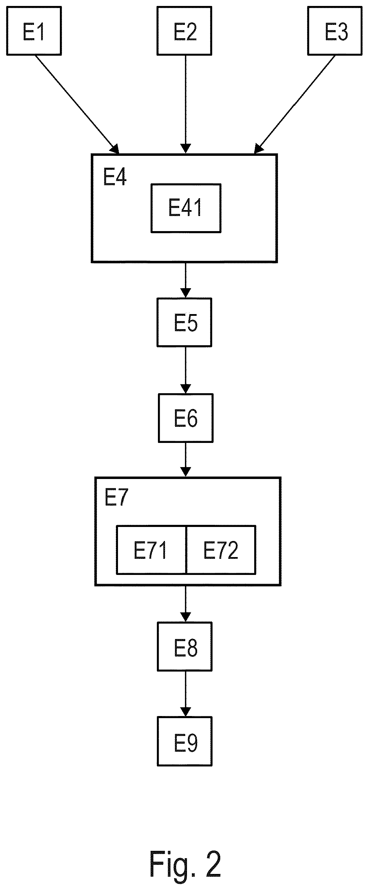

L'invention concerne également un procédé d'estimation (figure 2), lors d'une procédure d'approche d'un aéronef AC en vue d'un atterrissage sur une piste d'atterrissage RWY selon une approche prédéfinie de ladite piste d'atterrissage RWY, d'une déviation *DY, DZ* par rapport à un axe de guidage de référence A correspondant à ladite approche prédéfinie de la piste d'atterrissage RWY, et d'une vitesse *DVY, DVZ* d'un aéronef AC par rapport à la piste d'atterrissage RWY, la procédure d'approche étant réalisée à l'aide d'un dispositif d'aide à l'atterrissage, le dispositif d'aide à l'atterrissage comprenant au moins une station émettrice 22 configurée pour émettre un signal de guidage de référence définissant l'axe de guidage de référence A.

Le procédé d'estimation comporte au moins les étapes suivantes répétées de façon itérative :

- une première étape d'acquisition E1, mise en œuvre par la première unité d'acquisition 1, pour acquérir au moins une position courante (*lat^{GNSS}, lon^{GNSS}, h^{GNSS}*) de l'aéronef AC déterminée par un système de géo-positionnement GNSS,

- une deuxième étape d'acquisition E2, mise en œuvre par la deuxième unité d'acquisition 2, pour acquérir des données inertielles courantes de l'aéronef AC dans un repère inertiel dont au moins une accélération courante ($a_n$, $a_e$, $a_z$) déterminée par une centrale inertielle IRS,

- une troisième étape d'acquisition E3, mise en œuvre par une troisième unité d'acquisition 3 pour acquérir un écart latéral courant $\eta_{LOC}$ et un écart vertical courant $\eta_{GLD}$ à partir du ou des signaux de guidage de référence émis par le dispositif d'aide à l'atterrissage 22,

- une première étape de filtrage E4, mise en œuvre par la première unité de filtrage 4, pour estimer à l'aide d'un filtre de Kalman étendu une vitesse non-biaisée ($V_n$, $V_e$, $V_d$) de l'aéronef AC dans le repère inertiel à partir au moins de la position courante (*lat^{GNSS}, lon^{GNSS}, h^{GNSS}*) de l'aéronef AC acquise à la première étape d'acquisition E1 et des données inertielles courantes de l'aéronef AC acquises dans la deuxième étape d'acquisition E2,

- une première étape de changement de repère E5, mise en œuvre par la première unité de changement de repère 5, pour déterminer la vitesse non-biaisée ($V_{x_{rwy}}$, $V_{y_{rwy}}$, $V_{z_{rwy}}$) de l'aéronef AC dans un repère lié à la piste d'atterrissage RWY à partir de la vitesse non-biaisée ($V_n$, $V_e$, $V_d$) dans le repère inertiel estimée dans la première étape de filtrage E4,

- une deuxième étape de changement de repère E6, mise en œuvre par la deuxième unité de changement de repère 6, pour déterminer la position courante ( $X_{rwy}^{GNSS}$, $Y_{rwy}^{GNSS}$, $Z_{rwy}^{GNSS}$ ) de l'aéronef AC dans le repère lié à la piste d'atterrissage RWY à partir de la position courante (*lat^{GNSS}, lon^{GNSS}, h^{GNSS}*) acquise dans la première étape d'acquisition E1 et d'informations de localisation de la piste d'atterrissage RWY provenant du base de données, telle que la base de données de navigation NAVDB,

- une deuxième étape de filtrage E7, mise en œuvre par la deuxième unité de filtrage 7, pour estimer à l'aide d'au moins un filtre de Kalman étendu une position latérale $Y_{rwy}$ et une position verticale $Z_{rwy}$ de l'aéronef AC dans le repère lié à la piste d'atterrissage RWY, à partir de l'écart latéral courant $\eta_{LOC}$, l'écart vertical courant $\eta_{GLD}$, la vitesse non-biaisée ($V_{x_{rwy}}$, $V_{y_{rwy}}$, $V_{z_{rwy}}$) dans le repère lié à la piste d'atterrissage RWY et de la position courante ( $X_{rwy}^{GNSS}$, $Y_{rwy}^{GNSS}$, $Z_{rwy}^{GNSS}$ ) de l'aéronef AC dans le repère lié à la piste d'atterrissage RWY déterminée dans la deuxième étape de changement de repère E6,

- une étape de détermination E8, mise en œuvre par l'unité de détermination 8, pour déterminer la déviation latérale *DY* courante et la déviation verticale *DZ* courante de l'aéronef AC dans le repère lié à la piste d'atterrissage RWY ainsi que la vitesse latérale *DVY* courante et la vitesse verticale *DVZ* courante de l'aéronef AC dans le repère lié à la piste d'atterrissage RWY estimées dans la deuxième étape de filtrage 6 à partir de la position latérale $Y_{rwy}$ et la position verticale $Z_{rwy}$ de l'aéronef AC ainsi que de la vitesse non-biaisée ($V_n$, $V_e$, $V_d$) dans le repère inertiel estimée,

- une étape de transmission E9, mise en œuvre par l'unité de transmission 9, pour transmettre à un dispositif utilisateur 10 la déviation latérale *DY* courante et la déviation verticale *DZ* courante de l'aéronef AC dans le repère lié à la piste d'atterrissage RWY ainsi que la vitesse latérale *DVY* courante et la vitesse verticale *DVZ* courante de l'aéronef AC dans le repère lié à la piste d'atterrissage RWY.

Le filtre de Kalman étendu de la première étape de filtrage E4 peut présenter :

- un vecteur d'état comportant la vitesse non-biaisée ($V_n$, $V_e$, $V_d$) estimée de l'aéronef AC dans le repère inertiel, la position *(lat, lon, h)* estimée de l'aéronef AC) et un biais d'accélération ($ba_n$, $ba_e$, $ba_Z$) dans le repère inertiel,
- un vecteur de mesure comportant une position ($lat^{GNSS}$, $lon^{GNSS}$, $h^{GNSS}$) de l'aéronef AC déterminée par le système de géo-positionnement GNSS dans la première étape d'acquisition E1.

La première étape de filtrage E4 peut comprendre une sous-étape de mise à jour E41, mise en œuvre par l'unité de mise à jour 41 pour mettre à jour la position *(lat, lon, h)* estimée à l'aide de la position courante ($lat^{GNSS}$, $lon^{GNSS}$, $h^{GNSS}$) de l'aéronef AC déterminée par le système de géo-positionnement GNSS dans la première étape d'acquisition E1.

Le filtre de Kalman étendu de la première étape de filtrage E4 peut mettre en œuvre un modèle d'évolution et un modèle d'observation tels que décrits ci-dessus pour la première unité de filtrage 4

La deuxième étape de filtrage E7 peut mettre en œuvre un premier filtre de Kalman étendu et un deuxième filtre de Kalman étendu tels que décrit ci-dessus pour la deuxième unité de filtrage 7.

La deuxième étape de filtrage E7 peut comprendre une première sous-étape de mise à jour E71 mise en œuvre par la première unité de mise à jour 71 pour mettre à jour la position latérale $Y_{rwy}$ de l'aéronef AC estimée par le premier filtre de Kalman étendu dans le repère lié à la piste d'atterrissage RWY à l'aide de la position courante $Y_{rwy}^{GNSS}$ de l'aéronef AC dans le repère lié à la piste d'atterrissage RWY déterminée dans la deuxième étape de changement de repère E6.

La deuxième étape de filtrage E7 peut comprendre une deuxième sous-étape de mise à jour E72 mise en œuvre par la deuxième unité de mise à jour 72 pour mettre à jour la position verticale $Z_{rwy}$ de l'aéronef AC estimée par le premier filtre de Kalman étendu dans le repère lié à la piste d'atterrissage RWY à l'aide de la position verticale courante $Z_{rwy}^{GNSS}$ de l'aéronef AC dans le repère lié à la piste d'atterrissage RWY déterminée dans la deuxième étape de changement de repère E6.

Le premier filtre de Kalman étendu mis en œuvre dans la deuxième étape de filtrage E7 peut mettre en œuvre un modèle d'évolution et un modèle d'observation tels que décrits ci-dessus pour la deuxième unité de filtrage 7.

Le deuxième filtre de Kalman étendu mis en œuvre dans la deuxième étape de filtrage E7 peut mettre en œuvre un modèle d'évolution et un modèle d'observation tels que décrits ci-dessus pour la deuxième unité de filtrage 7.

Le dispositif d'estimation S et le procédé d'estimation présente de nombreux avantages.

Ils permettent une estimation des biais de vitesse basés sur une fusion des mesures d'un système de géo-positionnement GNSS et des mesures d'une centrale inertielle IRS. Cela permet d'obtenir des vitesses non-biaisées avant la procédure d'approche étant réalisée à l'aide d'un dispositif d'aide à l'atterrissage ILS afin de :

- servir comme données d'entrée dans la deuxième unité de filtrage 7,
- servir comme données d'entrée pour les lois de commande pour capturer les signaux de guidage de référence.

Les modèles d'observation utilisés dans la deuxième unité de filtrage 7 apporte une précision suffisante pour un atterrissage automatique grâce à l'introduction de l'estimation :

- deux biais liés à la station émettrice du signal Localizer $b_{LOC_{Sensi}}$ et $b_{Align}$,
- deux biais liés à la station émettrice du signal Glide Slope $b_{GLD_{Sensi}}$ et $b_{GPA}$.

Une surveillance de ces valeurs estimées peut alerter de signaux de guidage de référence erronés acquis par la troisième unité d'acquisition 3.

Par ailleurs, une architecture décentralisée des estimations permet d'avoir une meilleure analyse, une meilleure surveillance et un meilleur réglage des différentes unités du dispositif d'estimation S.

**Revendications**

1. Procédé d'estimation, lors d'une procédure d'approche d'un aéronef (AC) en vue d'un atterrissage sur une piste d'atterrissage (RWY) selon une approche prédéfinie de ladite piste d'atterrissage (RWY), d'une déviation *(DY, DZ)* par rapport à un axe de guidage de référence (A) correspondant à ladite approche prédéfinie de la piste d'atterrissage (RWY), et d'une vitesse *(DVY, DVZ)* d'un aéronef (AC) par rapport à la piste d'atterrissage (RWY), la procédure d'approche étant réalisée à l'aide d'un dispositif d'aide à l'atterrissage (ILS), le dispositif d'aide à l'atterrissage (ILS) comprenant au moins une station émettrice (22) configurée pour émettre au moins un signal de guidage de référence définissant l'axe de guidage de référence (A), comportant au moins les étapes suivantes répétées de façon itérative :

- une première étape d'acquisition (E1), mise en œuvre par une première unité d'acquisition (1), pour acquérir au moins une position courante ($lat^{GNSS}$, $lon^{GNSS}$, $h^{GNSS}$) de l'aéronef (AC) déterminée par un système de géo-positionnement (GNSS),

- une deuxième étape d'acquisition (E2), mise en œuvre par une deuxième unité d'acquisition (2), pour acquérir des données inertielles courantes de l'aéronef (AC) dans un repère inertiel dont au moins une accélération courante ($a_n$, $a_e$, $a_z$) déterminée par une centrale inertielle (IRS),

- une troisième étape d'acquisition (E3), mise en œuvre par une troisième unité d'acquisition (3) pour acquérir un écart latéral courant ($\eta_{LOC}$) et un écart vertical courant ($\eta_{GLD}$) à partir du ou des signaux de guidage de référence émis par le dispositif d'aide à l'atterrissage (22),

- une première étape de filtrage (E4), mise en œuvre par une première unité de filtrage (4), pour estimer à l'aide d'un filtre de Kalman étendu une vitesse non-biaisée ($V_n$, $V_e$, $V_d$) de l'aéronef (AC) dans le repère inertiel à partir au moins de la position courante de l'aéronef (AC) acquise à la première étape d'acquisition (E1) et des données inertielles courantes de l'aéronef (AC) acquises dans la deuxième étape d'acquisition (E2),

- une première étape de changement de repère (E5), mise en œuvre par une première unité de changement de repère (5), pour déterminer la vitesse non-biaisée ($V_{x_{rwy}}$, $V_{y_{rwy}}$, $V_{z_{rwy}}$) de l'aéronef (AC) dans un repère lié à la piste d'atterrissage (RWY) à partir de la vitesse non-biaisée ($V_n$, $V_e$, $V_d$) dans le repère inertiel estimée dans la première étape de filtrage (E4),

- une deuxième étape de changement de repère (E6), mise en œuvre par une deuxième unité de changement de repère (6), pour déterminer la position courante ($X_{rwy}^{GNSS}$, $Y_{rwy}^{GNSS}$, $Z_{rwy}^{GNSS}$) de l'aéronef (AC) dans le repère lié à la piste d'atterrissage (RWY) à partir de la position courante ($lat^{GNSS}$, $lon^{GNSS}$, $h^{GNSS}$) acquise dans la première étape d'acquisition (E1) et d'informations de localisation de la piste d'atterrissage (RWY) provenant d'une base de données,

- une deuxième étape de filtrage (E7), mise en œuvre par une deuxième unité de filtrage (7), pour estimer à l'aide d'au moins un filtre de Kalman étendu une position latérale ($Y_{rwy}$) et une position verticale ($Z_{rwy}$) de l'aéronef (AC) dans le repère lié à la piste d'atterrissage (RWY), à partir de l'écart latéral courant ($\eta_{LOC}$), l'écart vertical courant ($\eta_{GLD}$), la vitesse non-biaisée ($V_{x_{rwy}}$, $V_{y_{rwy}}$, $V_{z_{rwy}}$) dans le repère lié à la piste d'atterrissage (RWY) et de la position courante ($X_{rwy}^{GNSS}$, $Y_{rwy}^{GNSS}$, $Z_{rwy}^{GNSS}$) de l'aéronef (AC) dans le repère lié à la piste d'atterrissage (RWY) déterminée dans la deuxième étape de changement de repère (E6),

- une étape de détermination (E8), mise en œuvre par une unité de détermination (8), pour déterminer la déviation latérale *(DY)* courante et la déviation verticale *(DZ)* courante de l'aéronef (AC) dans le repère lié à la piste d'atterrissage (RWY) ainsi que la vitesse latérale *(DVY)* courante et la vitesse verticale *(DVZ)* courante de l'aéronef (AC) dans le repère lié à la piste d'atterrissage (RWY) estimées dans la deuxième étape de filtrage (E7) à partir de la position latérale ($Y_{rwy}$) et la position verticale ($Z_{rwy}$) de l'aéronef (AC) ainsi que de la vitesse non-biaisée ($V_n$, $V_e$, $V_d$) estimée dans le repère inertiel,

- une étape de transmission (E9), mise en œuvre par une unité de transmission (9), pour transmettre à un dispositif utilisateur (10) la déviation latérale *(DY)* courante et la déviation verticale *(DZ)* courante de l'aéronef (AC) dans le repère lié à la piste d'atterrissage (RWY) ainsi que la vitesse latérale *(DVY)* courante et la vitesse verticale *(DVZ)* courante de l'aéronef (AC) dans le repère lié à la piste d'atterrissage (RWY).

2. Procédé selon la revendication 1,

**caractérisée en ce que** le filtre de Kalman étendu de la première étape de filtrage (E4) présente :

- un vecteur d'état comportant la vitesse non-biaisée ($V_n$, $V_e$, $V_d$) estimée de l'aéronef (AC) dans le repère inertiel, la position *(lat, lon, h)* estimée de l'aéronef (AC) et un biais d'accélération ($ba_n$, $ba_e$, $ba_z$) dans le repère inertiel,
- un vecteur de mesure comportant une position ($lat^{GNSS}$, $lon^{GNSS}$, $h^{GNSS}$) de l'aéronef (AC) déterminée par le système de géo-positionnement (GNSS) dans la première étape d'acquisition (E1) ;

la première étape de filtrage (E4) comprenant une sous-étape de mise à jour (E41) mise en œuvre par une unité de mise à jour (41) pour mettre à jour la position *(lat, lon, h)* estimée à l'aide de la position courante ($lat^{GNSS}$, $lon^{GNSS}$, $h^{GNSS}$) de l'aéronef (AC) déterminée par le système de géo-positionnement (GNSS) dans la première étape d'acquisition (E1),
le filtre de Kalman étendu de la première étape de filtrage (E4) présentant en outre un modèle d'évolution dynamique comportant les équations suivantes :

$$dV_n/dt = a_n - 2\Omega_e V_e \sin(lat) + \frac{V_n V_Z}{M(lat) + h} - \frac{V_e{}^2 \tan(lat)}{N(lat) + h}$$

$$dV_e/dt = a_e + 2\Omega_e(V_n \sin(lat) + V_Z \cos(lat)) + \frac{V_e}{N(lat) + h}(V_Z + V_n \tan(lat))$$

$$dV_d/dt = a_Z - 2\Omega_e V_e \cos(lat) - \frac{V_n{}^2}{M(lat) + h} - \frac{V_e{}^2}{N(lat) + h} + g_D$$

$$dlat/dt = \frac{V_n}{M(lat) + h}$$

$$dlon/dt = \frac{V_e}{(N(lat) + h)\cos(lat)}$$

$$dh/dt = -V_d$$

$$dba_n/dt = dba_e/dt = dba_Z/dt = 0 \,;$$

et un modèle d'observation comportant l'équation suivantes :

$$lat^{GNSS} = lat + v_{lat,GNSS}$$

$$lon^{GNSS} = lon + v_{lon,GNSS}$$

$$h^{GNSS} = h + v_{h,GNSS},$$

dans lesquelles :

$\Omega_e$ correspond à la vitesse de rotation de la terre,
$M$ correspond au rayon de courbure méridien,
$N$ correspond au rayon de courbure du premier vertical de la terre,
$g_d$ correspond à l'accélération de la pesanteur,
$lat$ correspond à une coordonnée en latitude estimée de la position de l'aéronef (AC) dans le repère géographique,
$lon$ correspond à une coordonnée en longitude estimée de la position de l'aéronef (AC) dans le repère géographique,
$h$ correspond à une coordonnée en hauteur estimée de la position de l'aéronef (AC) dans le repère géographique,
$lat^{GNSS}$ correspond à une coordonnée en latitude de la position de l'aéronef (AC) mesurée par le système de géo-positionnement (GNSS) dans le repère géographique,
$lon^{GNSS}$ correspond à une coordonnée en longitude de la position de l'aéronef (AC) mesurée par le système de géo-positionnement (GNSS) dans le repère géographique,
$h^{GNSS}$ correspond à une coordonnée en hauteur de la position de l'aéronef (AC) mesurée par le système de géo-positionnement (GNSS) dans le repère géographique,
$v_{lat,GNSS}$ correspond à un bruit blanc de la coordonnée en latitude mesurée par le système de géo-positionnement (GNSS) dans le repère géographique,

$v_{lon,GNSS}$ correspond à un bruit blanc de la mesure de la coordonnée en longitude mesurée par le système de géo-positionnement (GNSS) dans le repère géographique,

$v_{h,GNSS}$ correspond à un bruit blanc de la mesure de la coordonnée en hauteur mesurée par le système de géo-positionnement (GNSS) dans le repère géographique,

$a_n$ correspond à une coordonnée de l'accélération courante de l'aéronef (AC) dans une direction Nord dans le repère inertiel,

$a_e$ correspond à une coordonnée de l'accélération courante de l'aéronef (AC) dans une direction Est dans le repère inertiel,

$a_Z$ correspond à une coordonnée de l'accélération courante de l'aéronef (AC) dans une direction de la pesanteur terrestre dans le repère inertiel,

$ba_n$ correspond à une coordonnée du biais de l'accélération courante de l'aéronef (AC) dans une direction Nord dans le repère inertiel,

$ba_e$ correspond à une coordonnée du biais de l'accélération courante de l'aéronef (AC) dans une direction Est dans le repère inertiel,

$ba_Z$ correspond à une coordonnée du biais de l'accélération courante de l'aéronef (AC) dans une direction de la pesanteur terrestre dans le repère inertiel,

$V_n$ correspond à une coordonnée de la vitesse non-biaisée de l'aéronef (AC) dans une direction Nord dans le repère inertiel,

$V_e$ correspond à une coordonnée de la vitesse non-biaisée de l'aéronef (AC) dans une direction Est dans le repère inertiel,

$V_Z$ correspond à une coordonnée de la vitesse non-biaisée de l'aéronef (AC) dans une direction de la pesanteur terrestre dans le repère inertiel.

3. Procédé selon l'une des revendications 1 et 2, **caractérisé en ce que** la position courante ($lat^{GNSS}$, $lon^{GNSS}$, $h^{GNSS}$) de l'aéronef (AC) déterminée par le système de géo-positionnement (GNSS) et la position *(lat, lon, h)* estimée de l'aéronef (AC) du vecteur d'état du filtre de Kalman étendu de la première étape de filtrage (E4) sont définies dans le repère géographique.

4. Procédé selon l'une des revendications 1, 2 et la revendication 3, **caractérisée en ce que** la deuxième étape de filtrage (E7) met en œuvre un premier filtre de Kalman étendu et un deuxième filtre de Kalman étendu,

le premier filtre de Kalman étendu présentant :

- un vecteur d'état comportant une position latérale ($Y_{RWY}$) de l'aéronef (AC) dans le repère lié à la piste d'atterrissage (RWY), un biais d'alignement angulaire ($b_{Align}$) d'un signal de guidage latéral délivré par le dispositif d'aide à l'atterrissage et un biais de facteur de sensibilité ($b_{LOC_{Sensi}}$) du signal de guidage latéral ;

- un vecteur de mesure comportant la position latérale ($Y_{rwy}^{GNSS}$) dans le repère lié à la piste d'atterrissage (RWY) et un écart latéral courant ($\eta_{LOC}$) mesuré en microampère à partir du signal de guidage latéral,

le deuxième filtre de Kalman étendu présentant :

- un vecteur d'état comportant une position verticale ($Z_{rwy}$) dans le repère lié à la piste d'atterrissage (RWY), un biais d'alignement angulaire ($b_{GPA}$) d'un signal de guidage vertical délivré par le dispositif d'aide à l'atterrissage et un biais de facteur de sensibilité ($b_{GLD_{Sensi}}$) du signal de guidage vertical ;

- un vecteur de mesure comportant la position verticale ($Z_{rwy}^{GNSS}$) dans le repère lié à la piste d'atterrissage (RWY) et un écart vertical courant ($\eta_{GLD}$) mesuré en DDM à partir du signal de guidage vertical ;

la deuxième étape de filtrage (E7) comprenant une première sous-étape de mise à jour (E71) mise en œuvre par une première unité de mise à jour (71) pour mettre à jour la position latérale ($Y_{rwy}$) de l'aéronef (AC) estimée par le premier filtre de Kalman étendu dans le repère lié à la piste d'atterrissage (RWY) à l'aide de la position courante ($Y_{rwy}^{GNSS}$) de l'aéronef (AC) dans le repère lié à la piste d'atterrissage (RWY) déterminée dans la deuxième étape de changement de repère (E6),

la deuxième étape de filtrage (E7) comprend une deuxième sous-étape de mise à jour (E72) mise en œuvre par une deuxième unité de mise à jour (72) pour mettre à jour la position verticale ($Z_{rwy}$) de l'aéronef (AC) estimée par le premier filtre de Kalman étendu dans le repère lié à la piste d'atterrissage (RWY) à l'aide de la position verticale courante ( $Z_{rwy}^{GNSS}$ ) de l'aéronef (AC) dans le repère lié à la piste d'atterrissage (RWY) déterminée dans la deuxième étape de changement de repère (E6),

- le premier filtre de Kalman étendu mis en œuvre dans la deuxième étape de filtrage (E7) présentant un modèle d'évolution dynamique comportant les équations suivantes :

$$dY_{rwy}/dt = V_{y_{rwy}}$$

$$db_{LOC_{Sensi}}/dt = db_{Align}/dt = 0,$$

et un modèle d'observation comportant l'équation suivante :

$$\eta_{loc} = \frac{L}{0{,}7 + b_{LOC_{Sensi}}} \cdot \frac{Y_{rwy} - \sin(b_{Align}) \cdot (L - X_{rwy})}{L - X_{rwy}} + v_{loc},$$

dans lesquelles :

$\eta_{loc}$ correspond à un écart latéral courant en microampère acquis à partir du ou des signaux de guidage de référence émis par le dispositif d'aide à l'atterrissage (22),
$v_{loc}$ correspond à un bruit de mesure de l'écart latéral courant
$L$ correspond à une distance entre le seuil (T) de la piste d'atterrissage (RWY) et la station émettrice qui émet le signal de guidage latéral de référence.
$b_{LOC_{Sensi}}$ correspond à un biais de facteur de sensibilité du signal de guidage latéral de référence par rapport à un signal latéral de référence standardisé de 0,7,
$b_{Align}$ correspond au biais d'alignement angulaire du signal de guidage latéral,
$X_{rwy}$ correspond à une position longitudinale de l'aéronef (AC) dans le repère lié à la piste d'atterrissage (RWY),
$F_{rwy}$ correspond à une position latérale de l'aéronef (AC) dans le repère lié à la piste d'atterrissage (RWY),
$V_{y_{rwy}}$ correspond à une vitesse latérale non-biaisée de l'aéronef (AC) dans le repère lié à la piste d'atterrissage (RWY) ;

- le deuxième filtre de Kalman étendu mis en œuvre dans la deuxième étape de filtrage (E7) présentant un modèle d'évolution dynamique comportant les équations suivantes :

$$dZ_{rwy}/dt = V_{z_{rwy}}$$

$$db_{GLD_{Sensi}}/dt = db_{GPA}/dt = 0,$$

et un modèle d'observation comportant l'équation suivante :

$$\eta_{GLD} = \frac{0{,}0875}{(GPA - b_{GPA}) \cdot (0{,}12 - b_{GLD_{Sensi}})} \cdot \left( \operatorname{atan}\left( \frac{Zrwy}{X_{rwy} + dX} \right) - (GPA - b_{GPA}) \right) + v_{GLD},$$

dans lesquelles :

$\eta_{GLD}$ correspond à un écart vertical courant en DDM acquis à partir du ou des signaux de guidage de référence émis par le dispositif d'aide à l'atterrissage (22),
$v_{GLD}$ correspond à un bruit de mesure de l'écart vertical courant,
$b_{GLD_{Sensi}}$ correspond à un biais de facteur de sensibilité du signal de guidage vertical de référence par rapport à un signal de guidage vertical standardisé de 0,12,
$GPA$ correspond à un angle entre l'axe de guidage vertical défini par le signal de guidage vertical et la piste d'atterrissage (RWY),

$b_{GPA}$ correspond au biais d'alignement angulaire du signal de guidage vertical, $v_{GLD}$ correspond à un bruit de mesure de l'écart vertical courant,

$dX$ correspond à une distance longitudinale entre le seuil (T) de la piste d'atterrissage (RWY) et la station émettrice qui émet le signal de guidage vertical de référence,

$Z_{rwy}$ correspond à la position verticale de l'aéronef (AC) dans le repère lié à la piste d'atterrissage (RWY),

$V_{Z_{rwy}}$ correspond à une vitesse verticale non-biaisée de l'aéronef (AC) dans le repère lié à la piste d'atterrissage (RWY).

5. Procédé selon l'une des revendications 1, 2 et 4 et la revendication 3, **caractérisé en ce que** la déviation latérale *(DY)* courante est égale à la position latérale ($Y_{rwy}$) de l'aéronef (AC) estimée par le premier filtre de Kalman étendu dans le repère lié à la piste d'atterrissage (RWY), la vitesse latérale *(DVY)* courante est égale à la vitesse latérale ($V_{Y_{rwy}}$) estimée par le premier filtre de Kalman étendu dans le repère lié à la piste d'atterrissage (RWY),

et **en ce que** la déviation verticale (DZ) courante de l'aéronef (AC) répond à l'expression suivante :

$$DZ = Z_{rwy} - (X_{rwy} + dX) \cdot \tan(GPA - b_{GPA}),$$

la vitesse verticale *DVZ* courante de l'aéronef (AC) répondant à l'expression suivante :

$$DVZ = V_g \cdot \tan(GPA - b_{GPA}) - V_{Z_{rwy}}.$$

6. Procédé selon l'une des revendications 1 et 2,
**caractérisé en ce que** la position courante de l'aéronef (AC) déterminée par le système de géo-positionnement (GNSS) et la position estimée de l'aéronef (AC) du vecteur d'état du filtre de Kalman étendu de la première étape de filtrage (E4) sont exprimées en pseudo-distance.

7. Dispositif d'estimation, lors d'une procédure d'approche d'un aéronef (AC) en vue d'un atterrissage sur une piste d'atterrissage (RWY) selon une approche prédéfinie de ladite piste d'atterrissage (RWY), d'une déviation *(DY, DZ)* par rapport à un axe de guidage de référence (A) correspondant à ladite approche prédéfinie de la piste d'atterrissage (RWY), et d'une vitesse d'un aéronef (AC) par rapport à la piste d'atterrissage (RWY), la procédure d'approche étant réalisée à l'aide d'un dispositif d'aide à l'atterrissage, le dispositif d'aide à l'atterrissage comprenant au moins une station émettrice (22) configurée pour émettre un signal de guidage de référence définissant l'axe de guidage de référence (A), comportant au moins :

- une première unité d'acquisition (1) configurée pour acquérir au moins une position courante (*lat$^{GNSS}$, lon$^{GNSS}$, h$^{GNSS}$*) de l'aéronef (AC) déterminée par un système de géo-positionnement (GNSS),
- une deuxième unité d'acquisition (2) configurée pour acquérir des données inertielles courantes de l'aéronef (AC) dans un repère inertiel dont au moins une accélération courante ($a_n$, $a_e$, $a_z$) déterminées par une centrale inertielle (IRS),
- une troisième unité d'acquisition (3) configurée pour acquérir un écart latéral courant ($\eta_{LOC}$) et un écart vertical courant ($\eta_{GLD}$) à partir du ou des signaux de guidage de référence émis par le dispositif d'aide à l'atterrissage (22),
- une première unité de filtrage (4) configurée pour estimer à l'aide d'un filtre de Kalman étendu une vitesse non-biaisée ($V_n$, $V_e$, $V_d$) de l'aéronef (AC) dans le repère inertiel à partir au moins de la position courante de l'aéronef (AC) acquise par la première unité d'acquisition (1) et des données inertielles courantes de l'aéronef (AC) acquises par la deuxième unité d'acquisition (2),
- une première unité de changement de repère (5) configurée pour déterminer la vitesse non-biaisée ($V_{x_{rwy}}$, $V_{rwy}$, $V_{z_{rwy}}$) de l'aéronef (AC) dans un repère lié à la piste d'atterrissage (RWY) à partir de la vitesse non-biaisée ($V_n$, $V_e$, $V_d$) dans le repère inertiel estimée par la première unité de filtrage (4),
- une deuxième unité de changement de repère (6) configurée pour déterminer la position courante (

$X_{rwy}^{GNSS}, Y_{rwy}^{GNSS}, Z_{rwy}^{GNSS}$ ) de l'aéronef (AC) dans le repère lié à la piste d'atterrissage (RWY) à partir de la position courante (*lat$^{GNSS}$, lon$^{GNSS}$, h$^{GNSS}$*) acquise par la première unité d'acquisition (1) et d'informations de localisation de la piste d'atterrissage (RWY) provenant d'une base de données,
- une deuxième unité de filtrage (7) configurée pour estimer à l'aide d'au moins un filtre de Kalman étendu une position latérale ($Y_{rwy}$) et une position verticale ($Z_{rwy}$) de l'aéronef (AC) dans le repère lié à la piste d'atterrissage (RWY) à partir de l'écart latéral courant ($\eta_{LOC}$), l'écart vertical courant ($\eta_{GLD}$), la vitesse non-biaisée ($V_{x_{rwy}}$, $V_{yx_{rwy}}$,

$V_{z_{rwy}}$) dans le repère lié à la piste d'atterrissage (RWY) et de la position courante ( $X_{rwy}^{GNSS}$, $Y_{rwy}^{GNSS}$, $Z_{rwy}^{GNSS}$ ) de l'aéronef (AC) dans le repère lié à la piste d'atterrissage (RWY) déterminée par la deuxième unité de changement de repère (6),

- une unité de détermination (8) configurée pour déterminer la déviation latérale *(DY)* courante et la déviation verticale (*DZ*) courante de l'aéronef (AC) dans le repère lié à la piste d'atterrissage (RWY) ainsi que la vitesse latérale *(DVY)* courante et la vitesse verticale *(DVZ)* courante de l'aéronef (AC) dans le repère lié à la piste d'atterrissage (RWY) estimées par la deuxième unité de filtrage (7) à partir de la position latérale ($Y_{rwy}$) et la position verticale ($Z_{rwy}$) de l'aéronef (AC) ainsi que de la vitesse non-biaisée ($V_n$, $V_e$, $V_d$) dans le repère inertiel estimée,

- une unité de transmission (9) configurée pour transmettre à un dispositif utilisateur (10) la déviation latérale *(DY)* courante et la déviation verticale (*DZ*) courante de l'aéronef (AC) dans le repère lié à la piste d'atterrissage (RWY) ainsi que la vitesse latérale *(DVY)* courante et la vitesse verticale *(DVZ)* courante de l'aéronef (AC) dans le repère lié à la piste d'atterrissage (RWY).

**8.** Aéronef,
**caractérisé en ce qu'**il comporte un dispositif d'estimation, tel que celui spécifié selon la revendication 7.

**Patentansprüche**

**1.** Verfahren zur Schätzung, während einer Anflugprozedur eines Luftfahrzeugs (AC) zwecks einer Landung auf einer Landepiste (RWY) gemäß einem vordefinierten Anflug der Landepiste (RWY), einer Abweichung *(DY, DZ)* in Bezug auf eine Referenzführungsachse (A), die dem vordefinierten Anflug der Landepiste (RWY) entspricht, und einer Geschwindigkeit (DVY, DVZ) eines Luftfahrzeugs (AC) in Bezug auf die Landepiste (RWY), wobei die Anflugprozedur mithilfe einer Vorrichtung zur Landehilfe (ILS) durchgeführt wird, wobei die Vorrichtung zur Landehilfe (ILS) mindestens eine Sendestation (22) beinhaltet, die konfiguriert ist zum Senden mindestens eines Referenzführungssignals, das die Referenzführungsachse (A) definiert,

umfassend mindestens die folgenden auf iterative Weise wiederholten Schritte:

- einen ersten Erfassungsschritt (E1), ausgeführt durch eine erste Erfassungseinheit (1), zum Erfassen mindestens einer aktuellen Position (*lat^{GNSS}, lon^{GNSS}, h^{GNSS}*) des Luftfahrzeugs (AC), bestimmt durch ein Geo-Positionierungssystem (GNSS),

- einen zweiten Erfassungsschritt (E2), ausgeführt durch eine zweite Erfassungseinheit (2), zum Erfassen aktueller Trägheitsdaten des Luftfahrzeugs (AC) in einem Trägheitsreferenzrahmen, davon mindestens eine aktuelle Beschleunigung ($a_n$, $a_e$, $a_z$), die durch ein Trägheitsnavigationssystem (IRS) bestimmt wird,

- einen dritten Erfassungsschritt (E3), ausgeführt durch eine dritte Erfassungseinheit (3), zum Erfassen einer aktuellen lateralen Differenz ($\eta_{LOC}$) und einer aktuellen vertikalen Differenz ($\eta_{GLD}$), ausgehend von dem oder den Referenzführungssignalen, die von der Vorrichtung zur Landehilfe (22) gesendet werden,

- einen ersten Filterungsschritt (E4), ausgeführt durch eine erste Filterungseinheit (4), zum Schätzen, mithilfe eines erweiterten Kalman-Filters, einer unverzerrten Geschwindigkeit ($V_n$, $V_e$, $V_d$) des Luftfahrzeugs (AC) in dem Trägheitsreferenzrahmen, ausgehend von mindestens der aktuellen Position des Luftfahrzeugs (AC), die bei dem ersten Erfassungsschritt (E1) erfasst wurde, und von aktuellen Trägheitsdaten des Luftfahrzeugs (AC), die in dem zweiten Erfassungsschritt (E2) erfasst wurden,

- einen ersten Schritt zur Änderung des Referenzrahmens (E5), ausgeführt durch eine erste Änderungseinheit (5) des Referenzrahmens, zum Bestimmen der unverzerrten Geschwindigkeit ($V_{x_{rwy}}$, $V_{y_{rwy}}$, $V_{z_{rwy}}$) des Luftfahrzeugs (AC) in einem Referenzrahmen, der mit der Landepiste (RWY) verbunden ist, ausgehend von der unverzerrten Geschwindigkeit ($V_n$, $V_e$, $V_d$) in dem bei dem ersten Filterschritt (E4) geschätzten Trägheitsreferenzrahmen,

- einen zweiten Schritt zur Änderung des Referenzrahmens (E6), ausgeführt durch eine zweite Änderungseinheit (6) des Referenzrahmens, zum Bestimmen der aktuellen Position ( $X_{rwy}^{GNSS}, Y_{rwy}^{GNSS}, Z_{rwy}^{GNSS}$ ) des Luftfahrzeugs (AC) in dem mit der Landepiste (RWY) verbundenen Referenzrahmen, ausgehend von der aktuellen Position (*lat^{GNSS}, lon^{GNSS}, h^{GNSS}*), die bei dem ersten Erfassungsschritt (E1) erfasst wurde, und von Informationen zur Ortung der Landepiste (RWY), die aus einer Datenbank stammen,

- einen zweiten Filterungsschritt (E7), ausgeführt durch eine zweite Filterungseinheit (7), zum Schätzen, mithilfe mindestens eines erweiterten Kalman-Filters, einer lateralen Position ($Y_{rwy}$) und einer vertikalen Position ($Z_{rwy}$) des Luftfahrzeugs (AC) in dem mit der Landepiste (RWV) verbundenen Referenzrahmen, ausgehend von der aktuellen lateralen Differenz ($\eta_{LOC}$), der aktuellen vertikalen Differenz ($\eta_{GLD}$), der unverzerrten Geschwindigkeit

$(V_{x_{rwy}}, V_{y_{rwy}}, V_{z_{rwy}})$ in dem mit der Landepiste (RWY) verbundenen Referenzrahmen und der aktuellen Position ( $X^{GNSS}_{rwy}, Y^{GNSS}_{rwy}, Z^{GNSS}_{rwy}$ ) des Luftfahrzeugs (AC) in dem mit der Landepiste (RWY) verbundenen Referenzrahmen, der bei dem zweiten Schritt zur Änderung des Referenzrahmens (E6) bestimmt wurde,

- einen Bestimmungsschritt (E8), ausgeführt durch eine Bestimmungseinheit (8), zum Bestimmen der aktuellen lateralen Abweichung (DY) und der aktuellen vertikalen Abweichung (DZ) des Luftfahrzeugs (AC) in dem mit der Landepiste (RWY) verbundenen Referenzrahmen sowie der aktuellen lateralen Geschwindigkeit *(DVY)* und der aktuellen vertikalen Geschwindigkeit *(DVZ)* des Luftfahrzeugs (AC) in dem mit der Landepiste (RWY) verbundenen Referenzrahmen, der bei dem zweiten Filterungsschritt (E7) geschätzt wurde, ausgehend von der lateralen Position $(Y_{rwy})$ und der vertikalen Position $(Z_{rwy})$ des Luftfahrzeugs (AC) sowie der unverzerrten Geschwindigkeit $(V_n, V_e, V_d)$, die in dem Trägheitsreferenzrahmen geschätzt wurde,

- einen Übertragungsschritt (E9), ausgeführt durch eine Übertragungseinheit (9), zum Übertragen der aktuellen lateralen Abweichung *(DY)* und der aktuellen vertikalen Abweichung (DZ) des Luftfahrzeugs (AC) in dem mit der Landepiste (RWY) verbundenen Referenzrahmen, sowie der aktuellen lateralen Geschwindigkeit *(DVY)* und der aktuellen vertikalen Geschwindigkeit *(DVZ)* des Luftfahrzeugs (AC) in dem mit der Landepiste (RWY) verbundenen Referenzrahmen.

2. Verfahren nach Anspruch 1,

   **dadurch gekennzeichnet, dass** der erweiterte Kalman-Filter des ersten Filterungsschritts (E4) Folgendes aufweist:

   - einen Zustandsvektor, der die unverzerrte Geschwindigkeit $(V_n, V_e, V_d)$, die von dem Luftfahrzeug (AC) in dem Trägheitsreferenzrahmen geschätzt wurde, die geschätzte Position *(lat, lon, h)* des Luftfahrzeugs (AC) und eine Beschleunigungsverzerrung $(ba_n, ba_e, ba_z)$ in dem Trägheitsreferenzrahmen umfasst,
   - einen Messvektor, der eine Position $(lat^{GNSS}, lon^{GNSS}, h^{GNSS})$ des Luftfahrzeugs (AC) umfasst, die durch das Geo-Positionierungssystem (GNSS) bei dem ersten Erfassungsschritt (E1) bestimmt wurde;

   wobei der erste Filterungsschritt (E4) einen Aktualisierungs-Unterschritt (E41), ausgeführt durch eine Aktualisierungseinheit (41), zum Aktualisieren der Position *(lat, lon, h),* die mithilfe der aktuellen Position $(h^{GNSS}, lat^{GNSS}, lon^{GNSS})$ des Luftfahrzeugs (AC) geschätzt wurde, die durch das Geo-Positionierungssystem (GNSS) bei dem ersten Erfassungsschritt (E1) bestimmt wurde, beinhaltet,
   wobei der erweiterte Kalman-Filter des ersten Filterungsschritts (E4) des Weiteren ein dynamisches Evolutionsmodell aufweist, das die folgenden Gleichungen umfasst:

$$dV_n/dt = a_n - 2\Omega_e V_e \sin(lat) + \frac{V_n V_Z}{M(lat) + h} - \frac{V_e^2 \tan(lat)}{N(lat) + h}$$

$$dV_e/dt = a_e + 2\Omega_e(V_n \sin(lat) + V_Z \cos(lat)) + \frac{V_e}{N(lat) + h}(V_Z + V_n \tan(lat))$$

$$dV_d/dt = a_Z - 2\Omega_e V_e \cos(lat) - \frac{V_n^2}{M(lat) + h} - \frac{V_e^2}{N(lat) + h} + g_D$$

$$dlat/dt = \frac{V_n}{M(lat) + h}$$

$$dlon/dt = \frac{V_e}{(N(lat) + h)\cos(lat)}$$

$$dh/dt = -V_d$$

$$dba_n/dt \;=\; dba_e/dt \;=\; dba_Z/dt \;=\; 0\,;$$

und ein Beobachtungsmodell, das die folgende Gleichung umfasst:
wobei:

$$lat^{GNSS} = lat + v_{lat,GNSS}$$

$$lon^{GNSS} = lon + v_{lon,GNSS}$$

$$h^{GNSS} = h + v_{h,GNSS},$$

$\Omega_e$ **der Geschwindigkeit** der Erdrotation entspricht,

$M$ dem Radius der Meridiankrümmung entspricht,

$N$ dem Radius der Krümmung der ersten Vertikalen der Erde entspricht,

$g_d$ der Erdbeschleunigung entspricht,

$lat$ einer Breitengradkoordinate entspricht, die von der Position des Luftfahrzeugs (AC) in dem geographischen Referenzrahmen geschätzt wurde,

$lon$ einer Längengradkoordinate entspricht, die von der Position des Luftfahrzeugs (AC) in dem geographischen Referenzrahmen geschätzt wurde,

$h$ einer Höhenkoordinate entspricht, die von der Position des Luftfahrzeugs (AC) in dem geographischen Referenzrahmen geschätzt wurde,

$lat^{GNSS}$ einer Breitengradkoordinate der Position des Luftfahrzeugs (AC) entspricht, die von dem Geo-Positionierungssystem (GNSS) in dem geographischen Referenzrahmen gemessen wurde,

$lon^{GNSS}$ einer Längengradkoordinate der Position des Luftfahrzeugs (AC) entspricht, die von dem Geo-Positionierungssystem (GNSS) in dem geographischen Referenzrahmen gemessen wurde,

$h^{GNSS}$ einer Höhengradkoordinate der Position des Luftfahrzeugs (AC) entspricht, die von dem Geo-Positionierungssystem (GNSS) in dem geographischen Referenzrahmen gemessen wurde,

$v_{lat,GNSS}$ einem weißen Rauschen der Breitengradkoordinate entspricht, die von dem Geo-Positionierungssystem (GNSS) in dem geographischen Referenzrahmen gemessen wurde,

$v_{lon,GNSS}$ einem weißen Rauschen der Messung der Längengradkoordinate entspricht, die von dem Geo-Positionierungssystem (GNSS) in dem geographischen Referenzrahmen gemessen wurde,

$v_{h,GNSS}$ einem weißen Rauschen der Messung der Höhengradkoordinate entspricht, die von dem Geo-Positionierungssystem (GNSS) in dem geographischen Referenzrahmen gemessen wurde,

$a_n$ einer Koordinate der aktuellen Beschleunigung des Luftfahrzeugs (AC) in einer Nord-Richtung in dem Trägheitsreferenzrahmen entspricht,

$a_e$ einer Koordinate der aktuellen Beschleunigung des Luftfahrzeugs (AC) in einer Ost-Richtung in dem Trägheitsreferenzrahmen entspricht,

$a_Z$ einer Koordinate der aktuellen Beschleunigung des Luftfahrzeugs (AC) in einer Richtung der Erdschwerkraft in dem Trägheitsreferenzrahmen entspricht,

$ba_n$ einer Koordinate der Verzerrung der aktuellen Beschleunigung des Luftfahrzeugs (AC) in einer Nord-Richtung in dem Trägheitsreferenzrahmen entspricht,

$ba_e$ einer Koordinate der Verzerrung der aktuellen Beschleunigung des Luftfahrzeugs (AC) in einer Ost-Richtung in dem Trägheitsreferenzrahmen entspricht,

$ba_Z$ einer Koordinate der Verzerrung der aktuellen Beschleunigung des Luftfahrzeugs (AC) in einer Richtung der Erdschwerkraft in dem Trägheitsreferenzrahmen entspricht,

$V_n$ einer Koordinate der unverzerrten Geschwindigkeit des Luftfahrzeugs (AC) in einer Nord-Richtung in dem Trägheitsreferenzrahmen entspricht,

$V_e$ einer Koordinate der unverzerrten Geschwindigkeit des Luftfahrzeugs (AC) in einer Ost-Richtung in dem Trägheitsreferenzrahmen entspricht,

$V_Z$ einer Koordinate der unverzerrten Geschwindigkeit des Luftfahrzeugs (AC) in einer Richtung der Erdschwerkraft in dem Trägheitsreferenzrahmen entspricht.

3. Verfahren nach einem der Ansprüche 1 und 2,
**dadurch gekennzeichnet, dass** die aktuelle Position *(lat^{GNSS},lon^{GNSS},h^{GNSS})* des Luftfahrzeugs (AC), bestimmt durch das Geo-Positionierungssystem (GNSS), und die geschätzte Position (*lat, lon, h)* des Luftfahrzeugs (AC) des Zustandsvektors des erweiterten Kalman-Filters des ersten Filterungsschritts (E4) in dem geographischen Referenzrahmen definiert sind.

4. Verfahren nach einem der Ansprüche 1, 2 und Anspruch 3,

**dadurch gekennzeichnet, dass** der zweite Filterungsschritt (E7) einen ersten erweiterten Kalman-Filter und einen zweiten erweiterten Kalman-Filter implementiert, wobei der erste erweiterte Kalman-Filter Folgendes aufweist:

- einen Zustandsvektor, der eine laterale Position ($Y_{rwy}$) des Luftfahrzeugs (AC) in dem mit der Landepiste (RWY) verbundenen Referenzrahmen, eine Winkelausrichtungsverzerrung ($b_{Ausricht}$) eines Signals zur lateralen Führung, das von der Vorrichtung zur Landehilfe geliefert wird, und eine Sensibilitätsfaktorverzerrung ($b_{LOC_{Sensi}}$) des Signals zur lateralen Führung umfasst;

- einen Messvektor, der die laterale Position ( $Y_{rwy}^{GNSS}$ ) in dem mit der Landepiste (RWY) verbundenen Referenzrahmen und eine aktuelle laterale Differenz ($\eta_{LOC}$), gemessen in Mikroampere ausgehend von dem Signal zur lateralen Führung umfasst,

wobei der zweite erweiterte Kalman-Filter Folgendes aufweist:

- einen Zustandsvektor, der eine vertikale Position ($Z_{rwy}$) in dem mit der Landepiste (RWY) verbundenen Referenzrahmen, eine Winkelausrichtungsverzerrung ($b_{GPA}$) eines Signals zur vertikalen Führung, das von der Vorrichtung zur Landehilfe geliefert wird, und eine Sensibilitätsfaktorverzerrung ($b_{GPA_{Sensi}}$) des Signals zur vertikalen Führung umfasst;

- einen Messvektor, der die vertikale Position ( $Z_{rwy}^{GNSS}$ ) in dem mit der Landepiste (RWY) verbundenen Referenzrahmen und eine aktuelle vertikale Differenz ($\eta_{GLD}$), gemessen in DDM ausgehend von dem Signal zur vertikalen Führung umfasst;

wobei der zweite Filterungsschritt (E7) einen ersten Aktualisierungs-Unterschritt (E7) beinhaltet, ausgeführt durch eine erste Aktualisierungseinheit (71) zum Aktualisieren der lateralen Position ($Y_{rwy}$) des Luftfahrzeugs (AC), die von dem ersten erweiterten Kalman-Filter in dem mit der Landepiste (RWV) verbundenen Referenzrahmen mithilfe der aktuellen Position ( $Y_{rwy}^{GNSS}$ ) des Luftfahrzeugs (AC) in dem mit der Landepiste (RWY) verbundenen Referenzrahmen geschätzt wurde, der bei dem zweiten Schritt zur Änderung des Referenzrahmens (E6) bestimmt wurde,
wobei der zweite Filterungsschritt (E7) einen zweiten Aktualisierungs-Unterschritt (E72) beinhaltet, ausgeführt durch eine zweite Aktualisierungseinheit (72) zum Aktualisieren der vertikalen Position ($Z_{rwy}$) des Luftfahrzeugs (AC), die von dem ersten erweiterten Kalman-Filter in dem mit der Landepiste (RWV) verbundenen Referenzrahmen mithilfe der aktuellen vertikalen Position ( $Z_{rwy}^{GNSS}$ ) des Luftfahrzeugs (AC) in dem mit der Landepiste (RWY) verbundenen Referenzrahmen geschätzt wurde, der bei dem zweiten Schritt zur Änderung des Referenzrahmens (E6) bestimmt wurde,

- wobei der erste erweiterte Kalman-Filter, der bei dem zweiten Filterungsschritt (E7) implementiert wurde, ein dynamisches Evolutionsmodell aufweist, das die folgenden Gleichungen umfasst:

$$dY_{rwy}/dt = V_{y_{rwy}}$$

$$db_{LOC_{Sensi}}/dt = db_{Align}/dt = 0,$$

und ein Beobachtungsmodell, das die folgende Gleichung umfasst:

$$\eta_{loc} = \frac{L}{0{,}7+b_{LOC_{Sensi}}} \cdot \frac{Y_{rwy}-\sin(b_{Align})\cdot(L-X_{rwy})}{L-X_{rwy}} + V_{loc},$$

wobei:

$\eta_{loc}$ einer aktuellen Differenz in Mikroampere entspricht, die ausgehend von dem oder den Referenzführungssignalen erfasst wurde, die durch die Vorrichtung zur Landehilfe (22) gesendet wurden,

$V_{loc}$ einem Messrauschen der aktuellen lateralen Differenz entspricht

L einem Abstand zwischen der Schwelle (T) der Landepiste (RWY) und der Sendestation, die das Referenzsignal zur lateralen Führung sendet, entspricht.

$b_{LOC_{Sensi}}$ einer Sensibilitätsfaktorverzerrung des Signals zur lateralen Führung in Bezug auf ein standardisiertes Signal zur lateralen Führung von 0,7 entspricht,

$b_{Align}$ der Winkelausrichtungsverzerrung des Signals zur lateralen Führung entspricht,

$X_{rwy}$ einer Position in Längsrichtung des Luftfahrzeugs (AC) in dem mit der Landepiste (RWY) verbundenen Referenzrahmen entspricht,

$Y_{rwy}$ einer lateralen Position des Luftfahrzeugs (AC) in dem mit der Landepiste (RWY) verbundenen Referenzrahmen entspricht,

$V_{y_{rwy}}$ einer unverzerrten lateralen Geschwindigkeit des Luftfahrzeugs (AC) in dem mit der Landepiste (RWY) verbundenen Referenzrahmen entspricht;

- wobei der zweite erweiterte Kalman-Filter, der bei dem zweiten Filterungsschritt (E7) implementiert wurde, ein dynamisches Evolutionsmodell aufweist, das die folgenden Gleichungen umfasst:

$$dZ_{rwy}/dt = V_{z_{rwy}}$$

$$db_{GLD_{Sensi}}/dt = db_{GPA}/dt = 0,$$

und ein Beobachtungsmodell, das die folgende Gleichung umfasst:

$$\eta_{GLD} = \frac{0{,}0875}{(GPA - b_{GPA}) \cdot (0{,}12 - db_{GLD_{Sensi}})} \cdot \left( \mathrm{atan}\left( \frac{z_{rwy}}{X_{rwy} + dX} \right) - (GPA - d_{GPA}) \right) +$$

$$v_{GLD},$$

wobei:

$\eta_{GLD}$ einer aktuellen vertikalen Differenz in DDM entspricht, die ausgehend von dem oder den Referenzführungssignalen erfasst wurde, die durch die Vorrichtung zur Landehilfe (22) gesendet wurden,

$v_{GLD}$ einem Messrauschen der aktuellen vertikalen Differenz entspricht,

$d_{GLD_{Sensi}}$ einer Sensibilitätsfaktorverzerrung des Referenzsignals zur vertikalen Führung in Bezug auf ein standardisiertes Signal zur vertikalen Führung von 0,12 entspricht,

$GPA$ einem Winkel zwischen der Achse zur vertikalen Führung, die durch das Signal zur vertikalen Führung definiert ist, und der Landepiste (RWY) entspricht,

$b_{GPA}$ der Winkelausrichtungsverzerrung des Signals zur vertikalen Führung entspricht,

$v_{GLD}$ einem Messrauschen der aktuellen vertikalen Differenz entspricht,

$dX$ einem Abstand in Längsrichtung zwischen der Schwelle (T) der Landepiste (RWY) und der Sendestation, die das Referenzsignal zur vertikalen Führung sendet, entspricht,

$Z_{rwy}$ einer vertikalen Position des Luftfahrzeugs (AC) in dem mit der Landepiste (RWY) verbundenen Referenzrahmen entspricht,

$V_{z_{rwy}}$ einer unverzerrten vertikalen Geschwindigkeit des Luftfahrzeugs (AC) in dem mit der Landepiste (RWY) verbundenen Referenzrahmen entspricht.

5. Verfahren nach einem der Ansprüche 1, 2 und 4 und Anspruch 3,

**dadurch gekennzeichnet, dass** die aktuelle laterale Abweichung (DY) gleich der lateralen Position ($Y_{rwy}$) des Luftfahrzeugs (AC) ist, die durch den ersten erweiterten Kalman-Filter in dem mit der Landepiste (RWY) verbundenen Referenzrahmen geschätzt wurde, dass die aktuelle laterale Geschwindigkeit *(DVY)* gleich der lateralen Geschwindigkeit ($V_{Y_{rwy}}$) ist, die durch den ersten erweiterten Kalman-Filter in dem mit der Landepiste (RWY) verbundenen Referenzrahmen geschätzt wurde, und dadurch, dass die aktuelle vertikale Abweichung (DZ) des Luftfahrzeugs (AC) dem folgenden Ausdruck genügt:

$$DZ = Z_{rwy} - (X_{rwy} + dX) \cdot \tan(GPA - b_{GPA}),$$

wobei die aktuelle vertikale Geschwindigkeit DVZ des Luftfahrzeugs (AC) dem folgenden Ausdruck genügt:

$$DVZ = V_g \cdot tan(GPA - b_{GPA}) - V_{Z_{rwy}}.$$

6. Verfahren nach einem der Ansprüche 1 und 2,
**dadurch gekennzeichnet, dass** die aktuelle Position des Luftfahrzeugs (AC), bestimmt durch das Geo-Positionierungssystem (GNSS), und die geschätzte Position des Luftfahrzeugs (AC) des Zustandsvektors des erweiterten Kalman-Filters des ersten Filterungsschritts (E4) als Pseudo-Abstände ausgedrückt werden.

7. Vorrichtung zur Schätzung, während einer Anflugprozedur eines Luftfahrzeugs (AC) zwecks einer Landung auf einer Landepiste (RWY) gemäß einem vordefinierten Anflug der Landepiste (RWY), einer Abweichung *(DY, DZ)* in Bezug auf eine Referenzführungsachse (A), die dem vordefinierten Anflug der Landepiste (RWY) entspricht, und einer Geschwindigkeit eines Luftfahrzeugs (AC) in Bezug auf die Landepiste (RWY), wobei die Anflugprozedur mithilfe einer Vorrichtung zur Landehilfe durchgeführt wird, wobei die Vorrichtung zur Landehilfe mindestens eine Sendestation (22) beinhaltet, die konfiguriert ist zum Senden eines Referenzführungssignals, das die Referenzführungsachse (A) definiert,
mindestens umfassend:

- eine erste Erfassungseinheit (1), konfiguriert zum Erfassen mindestens einer aktuellen Position (*lat$^{GNSS}$, lon$^{GNSS}$, h$^{GNSS}$*) des Luftfahrzeugs (AC), bestimmt durch ein Geo-Positionierungssystem (GNSS),
- eine zweite Erfassungseinheit (2), konfiguriert zum Erfassen aktueller Trägheitsdaten des Luftfahrzeugs (AC) in einem Trägheitsreferenzrahmen, davon mindestens eine aktuelle Beschleunigung ($a_n$, $a_e$, $a_z$), die durch ein Trägheitsnavigationssystem (IRS) bestimmt wird,
- eine dritte Erfassungseinheit (3), konfiguriert zum Erfassen einer aktuellen lateralen Differenz ($\eta_{LOC}$) und einer aktuellen vertikalen Differenz ($\eta_{GLD}$), ausgehend von dem oder den Referenzführungssignalen, die von der Vorrichtung zur Landehilfe (22) gesendet werden,
- eine erste Filterungseinheit (4), konfiguriert zum Schätzen, mithilfe eines erweiterten Kalman-Filters, einer unverzerrten Geschwindigkeit ($V_n$, $V_e$, $V_d$) des Luftfahrzeugs (AC) in dem Trägheitsreferenzrahmen, ausgehend von mindestens der aktuellen Position des Luftfahrzeugs (AC), die durch die erste Erfassungseinheit (1) erfasst wurde, und von aktuellen Trägheitsdaten des Luftfahrzeugs (AC), die durch die zweite Erfassungseinheit (E2) erfasst wurden,
- eine erste Einheit zur Änderung des Referenzrahmens (5), konfiguriert zum Bestimmen der unverzerrten Geschwindigkeit ($V_{x_{rwy}}$, $V_{y_{rwy}}$, $V_{z_{rwy}}$) des Luftfahrzeugs (AC) in einem mit der Landepiste (RWY) verbundenen Referenzrahmen, ausgehend von der unverzerrten Geschwindigkeit ($V_n$, $V_e$, $V_d$) in dem durch die erste Filterungseinheit (E4) geschätzten Trägheitsreferenzrahmen,
- eine zweite Einheit zur Änderung des Referenzrahmens (6), konfiguriert zum Bestimmen der aktuellen Position ($X_{rwy}^{GNSS}$, $Y_{rwy}^{GNSS}$, $Z_{rwy}^{GNSS}$) des Luftfahrzeugs (AC) in dem mit der Landepiste (RWY) verbundenen Referenzrahmen, ausgehend von der aktuellen Position (*lat$^{GNSS}$, lon$^{GNSS}$, h$^{GNSS}$*), die von der ersten Erfassungseinheit (E) erfasst wurde, und von Informationen zur Ortung der Landepiste (RWY), die aus einer Datenbank stammen,
- eine zweite Filterungseinheit (E7), konfiguriert zum Schätzen, mithilfe mindestens eines erweiterten Kalman-Filters, einer lateralen Position ($Y_{rwy}$) und einer vertikalen Position ($Z_{rwy}$) des Luftfahrzeugs (AC) in dem mit der Landepiste (RWV) verbundenen Referenzrahmen, ausgehend von der aktuellen lateralen Differenz ($\eta_{LOC}$), der aktuellen vertikalen Differenz ($\eta_{GLD}$), der unverzerrten Geschwindigkeit ($V_{x_{rwy}}$, $V_{y_{rwy}}$, $V_{z_{rwy}}$) in dem mit der Landepiste (RWY) verbundenen Referenzrahmen und der aktuellen Position ($X_{rwy}^{GNSS}$, $Y_{rwy}^{GNSS}$, $Z_{rwy}^{GNSS}$) des Luftfahrzeugs (AC) in dem mit der Landepiste (RWY) verbundenen Referenzrahmen, der von der zweiten Einheit zur Änderung des Referenzrahmens (6) bestimmt wurde,
- eine Bestimmungseinheit (8), konfiguriert zum Bestimmen der aktuellen lateralen Abweichung *(DY)* und der aktuellen vertikalen Abweichung (DZ) des Luftfahrzeugs (AC) in dem mit der Landepiste (RWY) verbundenen Referenzrahmen sowie der aktuellen lateralen Geschwindigkeit *(DVY)* und der aktuellen vertikalen Geschwindigkeit *(DVZ)* des Luftfahrzeugs (AC) in dem mit der Landepiste (RWY) verbundenen Referenzrahmen, der durch die zweiten Filterungseinheit (E7) geschätzt wurde, ausgehend von der lateralen Position ($Y_{rwy}$) und der vertikalen Position ($Z_{rwy}$) des Luftfahrzeugs (AC) sowie der unverzerrten Geschwindigkeit ($V_n$, $V_e$, $V_d$), die in dem Trägheitsreferenzrahmen geschätzt wurden,

- eine Übertragungseinheit (E9), konfiguriert zum Übertragen der aktuellen lateralen Abweichung (DY) und der aktuellen vertikalen Abweichung (DZ) des Luftfahrzeugs (AC) in dem mit der Landepiste (RWY) verbundenen Referenzrahmen, sowie der aktuellen lateralen Geschwindigkeit *(DVY)* und der aktuellen vertikalen Geschwindigkeit (DVZ) des Luftfahrzeugs (AC) in dem mit der Landepiste (RWY) verbundenen Referenzrahmen, an eine Benutzervorrichtung (10).

8. Luftfahrzeug,

**dadurch gekennzeichnet, dass** es eine Vorrichtung zum Schätzen, wie jene nach Anspruch 7 spezifiziert, umfasst.


**Claims**

1. A method for estimating, during an approach procedure for an aircraft (AC) with a view to landing on a landing runway (RWY) following a predefined approach to said landing runway (RWY), a deviation (DY, DZ) relative to a reference guidance axis (A) corresponding to said predefined approach to the landing runway (RWY), and a speed *(DVY, DVZ)* of an aircraft (AC) relative to the landing runway (RWY), the approach procedure being carried out with the assistance of a landing aid device (ILS), the landing aid device (ILS) comprising at least one transmitter station (22) configured to transmit at least one reference guidance signal defining the reference guidance axis (A), comprising at least the following iteratively repeated steps:

- a first acquisition step (E1), implemented by a first acquisition unit (1), for acquiring at least one current position ($lat^{GNSS}$, $lon^{GNSS}$, $h^{GNSS}$) of the aircraft (AC) determined by a geo-positioning system (GNSS);
- a second acquisition step (E2), implemented by a second acquisition unit (2), for acquiring current inertial data of the aircraft (AC) in an inertial reference frame, including at least one current acceleration ($a_n$, $a_e$, $a_z$) determined by an inertial unit (IRS);
- a third acquisition step (E3), implemented by a third acquisition unit (3), for acquiring a current lateral deviation ($\eta_{LOC}$) and a current vertical deviation ($\eta_{GLD}$) from the one or more reference guidance signals transmitted by the landing aid device (22);
- a first filtering step (E4), implemented by a first filtering unit (4), for estimating, using an extended Kalman filter, an unbiased speed ($V_n$, $V_e$, $V_d$) of the aircraft (AC) in the inertial reference frame from at least the current position of the aircraft (AC) acquired in the first acquisition step (E1) and the current inertial data of the aircraft (AC) acquired in the second acquisition step (E2);
- a first reference frame changing step (E5), implemented by a first reference frame changing unit (5), for determining the unbiased speed ($V_{x_{rwy}}$, $V_{y_{rwy}}$, $V_{z_{rwy}}$) of the aircraft (AC) in a reference frame linked to the landing runway (RWY) from the unbiased speed ($V_n$, $V_e$, $V_d$) in the inertial reference frame estimated in the first filtering step (E4);
- a second reference frame changing step (E6), implemented by a second reference frame changing unit (6), for determining the current position ($X_{rwy}^{GNSS}$, $Y_{rwy}^{GNSS}$, $Z_{rwy}^{GNSS}$) of the aircraft (AC) in the reference frame linked to the landing runway (RWY) from the current position ($lat^{GNSS}$, $lon^{GNSS}$, $h^{GNSS}$) acquired in the first acquisition step (E1) and from information concerning the location of the landing runway (RWY) originating from a database;
- a second filtering step (E7), implemented by a second filtering unit (7), for estimating, using at least one extended Kalman filter, a lateral position ($Y_{rwy}$) and a vertical position ($Z_{rwy}$) of the aircraft (AC) in the reference frame linked to the landing runway (RWY), from the current lateral deviation ($\eta_{LOC}$), the current vertical deviation ($\eta_{GLD}$), the unbiased speed ($V_{x_{rwy}}$, $V_{y_{rwy}}$, $V_{z_{rwy}}$) in the reference frame linked to the landing runway (RWY) and from the current position ($X_{rwy}^{GNSS}$, $Y_{rwy}^{GNSS}$, $Z_{rwy}^{GNSS}$) of the aircraft (AC) in the reference frame linked to the landing runway (RWY) determined in the second reference frame changing step (E6);
- a determination step (E8), implemented by a determination unit (8), for determining the current lateral deviation *(DY)* and the current vertical deviation (DZ) of the aircraft (AC) in the reference frame linked to the landing runway (RWY), as well as the current lateral speed *(DVY)* and the current vertical speed *(DVZ)* of the aircraft (AC) in the reference frame linked to the landing runway (RWY) estimated in the second filtering step (E7) from the lateral position ($Y_{rwy}$) and the vertical position ($Z_{rwy}$) of the aircraft (AC), as well as from the estimated unbiased speed ($V_n$, $V_e$, $V_d$) in the inertial reference frame;
- a transmission step (E9), implemented by a transmission unit (9), for sending a user device (10) the current lateral deviation *(DY)* and the current vertical deviation (DZ) of the aircraft (AC) in the reference frame linked to the landing runway (RWY), as well as the current lateral speed *(DVY)* and the current vertical speed *(DVZ)* of the aircraft (AC) in the reference frame linked to the landing runway (RWY).

**2.** The method as claimed in claim 1,

**characterized in that** the extended Kalman filter of the first filtering step (E4) has:

- a state vector comprising the estimated unbiased speed ($V_n$, $V_e$, $V_d$) of the aircraft (AC) in the inertial reference frame, the estimated position *(lat, lon, h)* of the aircraft (AC) and an acceleration bias ($ba_n$, $ba_e$, $ba_z$) in the inertial reference frame;
- a measurement vector comprising a position ($lat^{GNSS}$, $lon^{GNSS}$, $h^{GNSS}$) of the aircraft (AC) determined by the geo-positioning system (GNSS) in the first acquisition step (E1);

the first filtering step (E4) comprising an updating sub-step (E41) implemented by an updating unit (41) for updating the estimated position *(lat, lon, h)* using the current position ($lat^{GNSS}$, $lon^{GNSS}$, $h^{GNSS}$) of the aircraft (AC) determined by the geo-positioning system (GNSS) in the first acquisition step (E1), the extended Kalman filter of the first filtering step (E4) also having a dynamic evolution model comprising the following equations:

$$dV_n/dt = a_n - 2\Omega_e V_e \sin(lat) + \frac{V_n V_z}{M(lat) + h} - \frac{V_e{}^2 \tan(lat)}{N(lat) + h}$$

$$dV_e/dt = a_e + 2\Omega_e (V_n \sin(lat) + V_z \cos(lat)) + \frac{V_e}{N(lat) + h}(V_z + V_n \tan(lat))$$

$$dV_d/dt = a_z - 2\Omega_e V_e \cos(lat) - \frac{V_n{}^2}{M(lat) + h} - \frac{V_e{}^2}{N(lat) + h} + g_D$$

$$dlat/dt = \frac{V_n}{M(lat) + h}$$

$$dlon/dt = \frac{V_e}{(N(lat) + h)\cos(lat)}$$

$$dh/dt = -V_d$$

$$dba_n/dt = dba_e/dt = dba_z/dt = 0;$$

and an observation model comprising the following equations:

$$lat^{GNSS} = lat + v_{lat,GNSS}$$

$$lon^{GNSS} = lon + v_{lon,GNSS}$$

$$h^{GNSS} = h + v_{h,GNSS},$$

in which:

$\Omega_e$ corresponds to the rotation speed of the earth;

M corresponds to the meridian radius of curvature;

N corresponds to the radius of curvature of the first vertical of the earth;

$g_d$ corresponds to the gravitational acceleration;

*lat* corresponds to an estimated latitude coordinate of the position of the aircraft (AC) in the geographical reference frame;

*lon* corresponds to an estimated longitude coordinate of the position of the aircraft (AC) in the geographical reference frame;

h corresponds to an estimated height coordinate of the position of the aircraft (AC) in the geographical reference frame;

$lat^{GNSS}$ corresponds to a latitude coordinate of the position of the aircraft (AC) measured by the geo-positioning system (GNSS) in the geographical reference frame;

$lon^{GNSS}$ corresponds to a longitude coordinate of the position of the aircraft (AC) measured by the geo-positioning system (GNSS) in the geographical reference frame;

$h^{GNSS}$ corresponds to a height coordinate of the position of the aircraft (AC) measured by the geo-positioning system (GNSS) in the geographical reference frame;

$v_{lat,GNSS}$ corresponds to a white noise from the latitude coordinate measured by the geo-positioning system (GNSS) in the geographical reference frame;

$v_{lon,GNSS}$ corresponds to a white noise from the measurement of the longitude coordinate measured by the geo-positioning system (GNSS) in the geographical reference frame;

$v_{h,GNSS}$ corresponds to a white noise from the measurement of the height coordinate measured by the geo-positioning system (GNSS) in the geographical reference frame;

$a_n$ corresponds to a coordinate of the current acceleration of the aircraft (AC) in a Northern direction in the inertial reference frame;

$a_e$ corresponds to a coordinate of the current acceleration of the aircraft (AC) in an Eastward direction in the inertial reference frame;

$a_Z$ corresponds to a coordinate of the current acceleration of the aircraft (AC) in a terrestrial gravity direction in the inertial reference frame;

$ba_n$ corresponds to a coordinate of the bias of the current acceleration of the aircraft (AC) in a Northern direction in the inertial reference frame;

$ba_e$ corresponds to a coordinate of the bias of the current acceleration of the aircraft (AC) in an Eastward direction in the inertial reference frame;

$ba_Z$ corresponds to a coordinate of the bias of the current acceleration of the aircraft (AC) in a terrestrial gravity direction in the inertial reference frame;

$V_n$ corresponds to a coordinate of the unbiased speed of the aircraft (AC) in a Northern direction in the inertial reference frame;

$V_e$ corresponds to a coordinate of the unbiased speed of the aircraft (AC) in an Eastward direction in the inertial reference frame;

$V_Z$ corresponds to a coordinate of the unbiased speed of the aircraft (AC) in a terrestrial gravity direction in the inertial reference frame.

3. The method as claimed in any one of claims 1 and 2,
   **characterized in that** the current position ($lat^{GNSS}$, $lon^{GNSS}$, $h^{GNSS}$) of the aircraft (AC) determined by the geo-positioning system (GNSS) and the estimated position *(lat, lon, h)* of the aircraft (AC) from the state vector of the extended Kalman filter of the first filtering step (E4) are defined in the geographical reference frame.

4. The method as claimed in any one of claims 1, 2 and claim 3, **characterized in that** the second filtering step (E7) implements a first extended Kalman filter and a second extended Kalman filter,

   the first extended Kalman filter having:

   - a state vector comprising a lateral position ($Y_{RWY}$) of the aircraft (AC) in the reference frame linked to the landing runway (RWY), an angular alignment bias ($b_{Align}$) of a lateral guidance signal supplied by the landing aid device and a sensitivity factor bias ($b_{LOC_{Sensi}}$) of the lateral guidance signal;

   - a measurement vector comprising the lateral position ($Y_{rwy}^{GNSS}$) in the reference frame linked to the landing runway (RWY) and a current lateral deviation ($\eta_{LOC}$) measured in microamperes from the lateral guidance signal;

the second extended Kalman filter having:

- a state vector comprising a vertical position ($Z_{rwy}$) in the reference frame linked to the landing runway (RWY), an angular alignment bias ($b_{GPA}$) of a vertical guidance signal supplied by the landing aid device and a sensitivity factor bias ($b_{GLD_{Sensi}}$) of the vertical guidance signal;

- a measurement vector comprising the vertical position ( $Z_{rwy}^{GNSS}$ ) in the reference frame linked to the landing runway (RWY) and a current vertical deviation ($\eta_{GLD}$) measured in DDM from the vertical guidance signal;

the second filtering step (E7) comprising a first updating sub-step (E71) implemented by a first updating unit (71) for updating the lateral position ($Y_{rwy}$) of the aircraft (AC) estimated by the first extended Kalman filter in the reference frame linked to the landing runway (RWY) using the current position ( $Y_{rwy}^{GNSS}$ ) of the aircraft (AC) in the reference frame linked to the landing runway (RWY) determined in the second reference frame changing step (E6);

the second filtering step (E7) comprises a second updating sub-step (E72) implemented by a second updating unit (72) for updating the vertical position ($Z_{rwy}$) of the aircraft (AC) estimated by the first extended Kalman filter in the reference frame linked to the landing runway (RWY) using the current vertical position ( $\dot{Z}_{rwy}^{GNSS}$ ) of the aircraft (AC) in the reference frame linked to the landing runway (RWY) determined in the second reference frame changing step (E6);

- the first extended Kalman filter implemented in the second filtering step (E7) having a dynamic evolution model comprising the following equations:

$$dY_{rwy}/dt = V_{y_{rwy}}$$

$$db_{LOC_{Sensi}}/dt = db_{Align}/dt = 0,$$

and an observation model comprising the following equation:

$$\eta_{loc} = \frac{L}{0.7 + b_{LOC_{Sensi}}} \cdot \frac{Y_{rwy} - \sin(b_{Align}) \cdot (L - X_{rwy})}{L - X_{rwy}} + v_{loc},$$

in which:

$\eta_{loc}$ corresponds to a current lateral deviation in microamperes acquired from the one or more reference guidance signals transmitted by the landing aid device (22); $v_{loc}$ corresponds to a measurement noise of the current lateral deviation;
L corresponds to a distance between the threshold (T) of the landing runway (RWY) and the transmitter station that transmits the reference lateral guidance signal; $b_{LOC_{Sensi}}$ corresponds to a sensitivity factor bias of the reference lateral guidance signal relative to a standardized reference lateral signal of 0.7;
$b_{Align}$ corresponds to the angular alignment bias of the lateral guidance signal; $X_{rwy}$ corresponds to a longitudinal position of the aircraft (AC) in the reference frame linked to the landing runway (RWY);
$Y_{rwy}$ corresponds to a lateral position of the aircraft (AC) in the reference frame linked to the landing runway (RWY);
$V_{y_{rwy}}$ corresponds to an unbiased lateral speed of the aircraft (AC) in the reference frame linked to the landing runway (RWY);

- the second extended Kalman filter implemented in the second filtering step (E7) having a dynamic evolution model comprising the following equations:

$$dZ_{rwy}/dt = V_{z_{rwy}}$$

$$db_{GLD_{Sensi}}/dt = db_{GPA}/dt = 0,$$

and an observation model comprising the following equation:

$$\eta_{GLD} = \frac{0.0875}{(GPA - b_{GPA}) \cdot (0.12 - b_{GLD_{Sensi}})} \cdot \left( \operatorname{atan}\left(\frac{Zrwy}{X_{rwy} + dX}\right) - (GPA - b_{GPA}) \right) + v_{GLD},$$

in which:

$\eta_{GLD}$ corresponds to a current vertical deviation in DDM acquired from the one or more reference guidance signals transmitted by the landing aid device (22);

$v_{GLD}$ corresponds to a measurement noise of the current vertical deviation; $b_{GLD_{Sensi}}$ corresponds to a sensitivity factor bias of the reference vertical guidance signal relative to a standardized vertical guidance signal of 0.12;

$GPA$ corresponds to an angle between the vertical guidance axis defined by the vertical guidance signal and the landing runway (RWY);

$b_{GPA}$ corresponds to the angular alignment bias of the vertical guidance signal; $v_{GLD}$ corresponds to a measurement noise of the current vertical deviation;

$dX$ corresponds to a longitudinal distance between the threshold (T) of the landing runway (RWY) and the transmitter station that transmits the reference vertical guidance signal;

$Z_{rwy}$ corresponds to the vertical position of the aircraft (AC) in the reference frame linked to the landing runway (RWY);

$V_{Z_{rwy}}$ corresponds to an unbiased vertical speed of the aircraft (AC) in the reference frame linked to the landing runway (RWY).

5. The method as claimed in any one of claims 1, 2 and 4 and claim 3, **characterized in that** the current lateral deviation (DY) is equal to the lateral position ($Y_{rwy}$) of the aircraft (AC) estimated by the first extended Kalman filter in the reference frame linked to the landing runway (RWY), the current lateral speed (DVY) is equal to the lateral speed ($V_{Y_{rwy}}$) estimated by the first extended Kalman filter in the reference frame linked to the landing runway (RWY),

and **in that** the current vertical deviation (DZ) of the aircraft (AC) complies with the following expression:

$$DZ = Z_{rwy} - (X_{rwy} + dX) \cdot \tan(GPA - b_{GPA}),$$

with the current vertical speed (DVZ) of the aircraft (AC) complying with the following expression:

$$DVZ = V_g \cdot \tan(GPA - b_{GPA}) - V_{Z_{rwy}}.$$

6. The method as claimed in any one of claims 1 and 2,
**characterized in that** the current position of the aircraft (AC) determined by the geo-positioning system (GNSS) and the estimated position of the aircraft (AC) from the state vector of the extended Kalman filter of the first filtering step (E4) are expressed as pseudo-range.

7. A device for estimating, during an approach procedure for an aircraft (AC) with a view to landing on a landing runway (RWY) following a predefined approach to said landing runway (RWY), a deviation (DY, DZ) relative to a reference guidance axis (A) corresponding to said predefined approach to the landing runway (RWY), and a speed of an aircraft (AC) relative to the landing runway (RWY), the approach procedure being carried out with the assistance of a landing aid device, the landing aid device comprising at least one transmitter station (22) configured to transmit a reference guidance signal defining the reference guidance axis (A),
comprising at least:

- a first acquisition unit (1) configured to acquire at least one current position ($lat^{GNSS}$, $lon^{GNSS}$, $h^{GNSS}$) of the aircraft (AC) determined by a geo-positioning system (GNSS);
- a second acquisition unit (2) configured to acquire current inertial data of the aircraft (AC) in an inertial reference frame, including at least one current acceleration ($a_n$, $a_e$, $a_z$) determined by an inertial unit (IRS);

- a third acquisition unit (3) configured to acquire a current lateral deviation ($\eta_{LOC}$) and a current vertical deviation ($\eta_{GLD}$) from the one or more reference guidance signals transmitted by the landing aid device (22);
- a first filtering unit (4) configured to estimate, using an extended Kalman filter, an unbiased speed ($V_n$, $V_e$, $V_d$) of the aircraft (AC) in the inertial reference frame from at least the current position of the aircraft (AC) acquired by the first acquisition unit (1) and the current inertial data of the aircraft (AC) acquired by the second acquisition unit (2);
- a first reference frame changing unit (5) configured to determine the unbiased speed ($V_{x_{rwy}}$, $V_{y_{rwy}}$, $V_{z_{rwy}}$) of the aircraft (AC) in a reference frame linked to the landing runway (RWY) from the unbiased speed ($V_n$, $V_e$, $V_d$) in the inertial reference frame estimated by the first filtering unit (4);
- a second reference frame changing unit (6) configured to determine the current position ($X_{rwy}^{GNSS}$, $Y_{rwy}^{GNSS}$, $Z_{rwy}^{GNSS}$) of the aircraft (AC) in the reference frame linked to the landing runway (RWY) from the current position ($lat^{GNSS}$, $lon^{GNSS}$, $h^{GNSS}$) acquired by the first acquisition unit (1) and from information concerning the location of the landing runway (RWY) originating from a database;
- a second filtering unit (7) configured to estimate, using at least one extended Kalman filter, a lateral position ($Y_{rwy}$) and a vertical position ($Z_{rwy}$) of the aircraft (AC) in the reference frame linked to the landing runway (RWY), from the current lateral deviation ($\eta_{LOC}$), the current vertical deviation ($\eta_{GLD}$), the unbiased speed ($V_{x_{rwy}}$, $V_{y_{rwy}}$, $V_{z_{rwy}}$) in the reference frame linked to the landing runway (RWY) and from the current position ($X_{rwy}^{GNSS}$, $Y_{rwy}^{GNSS}$, $Z_{rwy}^{GNSS}$) of the aircraft (AC) in the reference frame linked to the landing runway (RWY) determined by the second reference frame changing unit (6);
- a determination unit (8) configured to determine the current lateral deviation *(DY)* and the current vertical deviation *(DZ)* of the aircraft (AC) in the reference frame linked to the landing runway (RWY), as well as the current lateral speed *(DVY)* and the current vertical speed *(DVZ)* of the aircraft (AC) in the reference frame linked to the landing runway (RWY) estimated by the second filtering unit (7) from the lateral position ($Y_{rwy}$) and the vertical position ($Z_{rwy}$) of the aircraft (AC), as well as from the estimated unbiased speed ($V_n$, $V_e$, $V_d$) in the inertial reference frame;
- a transmission unit (9) configured to send a user device (10) the current lateral deviation *(DY)* and the current vertical deviation *(DZ)* of the aircraft (AC) in the reference frame linked to the landing runway (RWY), as well as the current lateral speed *(DVY)* and the current vertical speed *(DVZ)* of the aircraft (AC) in the reference frame linked to the landing runway (RWY).

8. An aircraft,
   **characterized in that** it comprises an estimation device, such as that specified as claimed in claim 7.

Fig. 1

Fig. 2

Fig. 3

Fig. 4

AC

S

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3111710 A1